(19) **Europäisches Patentamt / European Patent Office / Office européen des brevets**

(11) **EP 4 083 966 B1**

(12) **FASCICULE DE BREVET EUROPEEN**

(45) Date de publication et mention de la délivrance du brevet:
**25.03.2026 Bulletin 2026/13**

(21) Numéro de dépôt: **22170172.5**

(22) Date de dépôt: **27.04.2022**

(51) Classification Internationale des Brevets (IPC):
*G08G 5/21* (2025.01)       *G08G 5/32* (2025.01)
*G08G 5/53* (2025.01)       *G08G 5/74* (2025.01)
*G08G 5/76* (2025.01)       *G01C 23/00* (2006.01)
*G08G 5/55* (2025.01)       *G08G 5/80* (2025.01)

(52) Classification Coopérative des Brevets (CPC):
**G08G 5/21; G01C 23/00; G08G 5/32; G08G 5/53; G08G 5/74; G08G 5/76;** G08G 5/55; G08G 5/80

(54) **PROCÉDÉ ET SYSTÈME DE CALCUL DE TRAJECTOIRE LATERALE D'UN AÉRONEF**

VERFAHREN UND SYSTEM ZUR BERECHNUNG DER LATERALEN FLUGBAHN EINES FLUGZEUGS

METHOD AND SYSTEM FOR CALCULATING THE LATERAL TRAJECTORY OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2021 FR 2104509**

(43) Date de publication de la demande:
**02.11.2022 Bulletin 2022/44**

(73) Titulaire: **Airbus Operations (S.A.S.)**
**31060 Toulouse Cedex 9 (FR)**

(72) Inventeurs:
• **PASTRE, Thomas**
  **31060 TOULOUSE (FR)**
• **ARNOUX, Jérôme**
  **31060 TOULOUSE (FR)**
• **CONSIGLIERI PEDROSO MENDES DIAS, Miguel**
  **31060 TOULOUSE (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2019 108 680     US-B1- 6 424 889**

• **D'AMATO EGIDIO ET AL: "Bi-level Flight Path Planning of UAV Formations with Collision Avoidance", JOURNAL OF INTELLIGENT, SPRINGER NETHERLANDS, DORDRECHT, vol. 93, no. 1, 11 May 2018 (2018-05-11), pages 193 - 211, XP036685881, ISSN: 0921-0296, [retrieved on 20180511], DOI: 10.1007/S10846-018-0861-1**
• **D'AMATO EGIDIO ET AL: "Optimal Flight Paths over Essential Visibility Graphs", 2018 INTERNATIONAL CONFERENCE ON UNMANNED AIRCRAFT SYSTEMS (ICUAS), IEEE, 12 June 2018 (2018-06-12), pages 708 - 714, XP033396663, DOI: 10.1109/ICUAS.2018.8453355**

## Description

DOMAINE TECHNIQUE

La présente invention concerne un système de calcul automatique en temps-réel d'une trajectoire à suivre pour faire transiter un aéronef selon un profil de trajectoire verticale à respecter, depuis une position géographique courante en vol, vers une destination géoréférencée et selon une direction à suivre à destination.

ETAT DE LA TECHNIQUE ANTERIEURE

Lorsqu'un aéronef est en vol, il peut être souhaitable de fournir une assistance automatique pour déterminer de manière automatique une trajectoire qui permette d'amener l'aéronef jusqu'à une position géoréférencée. De nombreux obstacles sont à prendre en compte dans la détermination d'une trajectoire qui soit volable (« flyable » en anglais) : le relief du terrain, les obstacles météorologiques, les zones militaires dont le survol est interdit, l'état opérationnel de l'aéronef (dépressurisation cabine, moteur hors-service...). Une trajectoire volable est une trajectoire qui en tout point présente une marge de distance minimale (ou prédéterminée) par rapport à tout obstacle identifié (relief...) et que peut suivre l'aéronef compte tenu de son état opérationnel (dépressurisation éventuelle, perte d'un moteur...). Il est notamment souhaitable de fournir une telle assistance automatique dans le cadre de pilotage de drones.

Il est connu du document US 6424889 B1, un procédé pour la génération d'une trajectoire horizontale d'évitement de zones dangereuses pour un aéronef.

Dans l'état actuel de la technique, déterminer de manière automatique, en temps-réel, une telle trajectoire requiert de grandes ressources de traitement, et surtout un temps de calcul important. Il est alors souhaitable de pallier ces inconvénients de l'état de la technique.

Il est notamment souhaitable de fournir une solution permettant de déterminer une trajectoire sûre (« safe » en anglais) à suivre pour amener un aéronef actuellement en vol, depuis sa position géographique courante, à une destination géoréférencée en respectant un profil de trajectoire verticale préétabli. Il est plus particulièrement souhaitable de fournir une solution qui permette de déterminer cette trajectoire en un temps réduit. Il est aussi souhaitable de fournir une solution qui permette d'indiquer si une telle trajectoire existe.

Il est connu le document US 6,424,889 B1 qui divulgue une méthode pour générer une trajectoire horizontale d'aéronef évitant des zones de danger.

Il est aussi connu le document "Bi-level Flight Path Planning of UAV Formations with Collision Avoidance", D'AMATO EGIDIO ET AL, JOURNAL OF 1NTELL1GENT, SPR1NGER NETHERLANDS, DORDRECHT, vol. 93, no.1, 11 mai 2018, pages 193-211, XP036685881, qui traite de générer des trajectoires de vol pour un essaim de véhicules aériens sans pilote (UAV) coopérants, volant en formation, en présence d'obstacles sous forme de polygones.

Il est aussi connu le document "Optimal Flight paths over Essential Visibility Graphs", 2018 1NTERNAT10NAL CONFERENCE ON UNMANNED AIRCRAFT SYSTEMS (1CUAS), 1EEE, 12 juin 2018, pages 708-714, XP033396663, qui traite de générer des trajectoires de vol conformes à des contraintes de mission résultant de zones dont le survol est interdit et/ou d'obstacles, et à des limitations mécanique (rayon de virage minimal, angles de montée et de descente maximaux)

EXPOSE DE L'INVENTION

Un objet de la présente invention est de proposer un procédé de génération de trajectoire pour amener un aéronef en vol depuis une position courante de l'aéronef à une destination ayant une position géoréférencée, le procédé étant implémenté par un système de génération automatique de trajectoire sous forme de circuiterie électronique embarquée dans l'aéronef, le procédé comportant les étapes suivantes : obtenir des polygones représentatifs d'obstacles potentiellement rencontrés par l'aéronef depuis la position courante de l'aéronef jusqu'à la destination, chaque polygone étant associé avec une couche d'altitude dans laquelle l'obstacle est inclus dans ledit polygone ; définir deux premiers cercles tangentiels par rapport à une direction actuelle de vol de l'aéronef, l'un étant centré à droite, l'autre étant centré à gauche, par rapport à la position courante de l'aéronef, le rayon des premiers cercles étant un rayon minimum de virage que peut effectuer l'aéronef au regard de son état opérationnel ; définir deux deuxièmes cercles tangentiels par rapport à une direction à suivre à destination, l'un étant centré à droite, l'autre étant centré à gauche, par rapport à la position géoréférencée de la destination ; définir un troisième cercle autour de sommets de dits polygones, de rayon égal au maximum entre une marge latérale prédéterminée et un rayon de virage que peut effectuer l'aéronef au regard de sa vitesse à l'arrivée au sommet du polygone ; rechercher une trajectoire latérale volable entre la position courante de l'aéronef et la destination en contournant les polygones par les sommets en recherchant des trajectoires tangentielles entre lesdits cercles, en respectant un profil de trajectoire verticale préétabli, la direction actuelle de vol de l'aéronef et la direction à suivre à destination, ainsi que la marge latérale prédéterminée et une marge verticale prédéterminée avec les polygones ; et pour au moins une arête de polygone, le procédé comporte également les étapes suivantes :

- calculer une distance entre la position courante de l'aéronef et chaque arête de polygone ;
- lorsque le profil de trajectoire verticale correspond à une montée, déterminer en fonction du profil de trajectoire verticale si, après avoir parcouru la distance à l'arête diminuée de la marge latérale, l'altitude de l'aéronef est supérieure à celle de ladite arête plus la marge verticale, et si tel est le cas, exclure l'arête de la recherche de trajectoire latérale volable ; ou

- lorsque le profil de trajectoire verticale correspond à une descente, déterminer en fonction du profil de trajectoire verticale si, après avoir parcouru la distance à l'arête augmentée de la marge latérale, l'altitude de l'aéronef est inférieure à celle d'une couche d'altitude en dessous de ladite arête plus la marge verticale, et si tel est le cas, exclure l'arête de la recherche de trajectoire latérale volable. Ainsi, grâce à la définition des cercles, la recherche de trajectoire volable est simplifiée, ce qui réduit le temps nécessaire pour trouver une telle trajectoire.

Selon un mode de réalisation particulier, le procédé comporte en outre les étapes successives suivantes : dilater les polygones de la marge latérale prédéterminée dans toutes les directions ; fusionner les polygones qui se touchent ou se chevauchent par couche d'altitude ; rétracter les polygones de la marge latérale prédéterminée dans toutes les directions.

Selon un mode de réalisation particulier, le procédé comporte en outre les étapes suivantes :

- rechercher une trajectoire volable tangentielle entre un dit premier cercle et un dit deuxième cercle, en respectant le profil de trajectoire verticale préétabli, la direction actuelle de vol de l'aéronef et la direction à suivre à destination, ainsi que la marge latérale prédéterminée et une marge verticale prédéterminée avec les polygones ; rechercher la trajectoire volable, depuis la position courante de l'aéronef vers la position de la destination, par contournement de sommets de polygone lorsqu'aucune trajectoire volable tangentielle entre un dit premier cercle et un dit deuxième cercle n'a été trouvée.

Selon un mode de réalisation particulier, le procédé comporte en outre les étapes suivantes : déterminer des trajectoires candidates par progression de cercle en cercle parmi lesdits cercles et stocker les trajectoires candidates dans une liste ; choisir dans la liste L une trajectoire candidate à poursuivre qui est la plus prometteuse au regard d'une fonction de coût F telle que :

$$F = G + H$$

où G est une distance parcourue jusqu'à la fin actuelle de la trajectoire candidate et H est une heuristique de recherche de chemin qui sous-estime la distance encore à parcourir jusqu'à la destination.

Selon un mode de réalisation particulier, le procédé comporte en outre les étapes suivantes : lorsque le système de génération automatique de trajectoire a trouvé une première trajectoire candidate P1 sûre vers un sommet V de polygone, sauvegarder sa valeur de distance G, notée Gv ; lorsque le système de génération automatique de trajectoire trouve une deuxième trajectoire candidate P2 qui envisage de rejoindre le sommet V pour le contourner avec une valeur actuelle de distance G, notée Gp, tester la condition suivante :

$$Gp + d_{min} > Gv$$

où $d_{min}$ est une limite inférieure de longueur du chemin entre la position à laquelle la trajectoire considérée s'est arrêtée et le sommet V. Et lorsque la condition est remplie, conserver la liste inchangée, et sinon, remplacer la première trajectoire candidate P1 par la deuxième trajectoire candidate P2 dans la liste.

Selon un mode de réalisation particulier, le procédé comporte en outre les étapes suivantes : lorsque le système de génération automatique de trajectoire a trouvé une trajectoire candidate vers un sommet de polygone, calculer la somme de la valeur G actuelle de la trajectoire candidate en question plus la distance jusqu'au troisième cercle du sommet en question plus la distance de ce troisième cercle à un dit deuxième cercle ; abandonner l'expansion de ladite trajectoire candidate vers ledit sommet de polygone si la somme calculée est plus grande que la valeur de fonction de coût F d'une trajectoire déjà trouvée pour amener l'aéronef depuis une position courante à la destination.

Selon un mode de réalisation particulier, le procédé comporte l'étape suivante : garder uniquement les polygones des couches qui sont pertinentes au regard d'une altitude constante ou d'un intervalle d'altitude défini par le profil de trajectoire verticale.

Selon un mode de réalisation particulier, seuls les coins les plus à droite et à gauche d'un obstacle sont considérés pour effectuer un contournement de l'obstacle.

Selon un mode de réalisation particulier, le procédé comporte en outre les étapes suivantes, pour au moins un polygone représentatif d'un obstacle météorologique se déplaçant à une vitesse vObst dans une direction $D_{obst}$ : calculer une distance Lext de la façon suivante :

$$Lext = vObst * \frac{d_{max} - d_e}{A\_VEL}$$

où $d_{max}$ représente la distance maximum jusqu'au troisième cercle centré sur un sommet du polygone en question et $d_e$ représente une distance euclidienne considérée en calculant un instant d'arrivée $T_0$ sur ledit sommet et un instant réel maximal $t_{max}$ d'arrivée sur ledit sommet ; étendre les dimensions du polygone en question en appliquant à chaque sommet un décalage égal à la distance Lext dans la direction $D_{obst}$ dès lors que ce décalage déplace ledit sommet vers l'extérieur du polygone en question.

Selon un mode de réalisation particulier, le procédé comporte en outre les étapes suivantes : calculer une distance Lext$_c$ de la façon suivante :

$$Lext_c = vObst * \frac{\alpha * R}{A\_VEL}$$

où $\alpha$ est un angle, exprimé en radians, maximum de virage que peut effectuer l'aéronef à partir du sommet du polygone en question et R représente le rayon de virage que peut effectuer l'aéronef ; étendre les dimensions du polygone en appliquant un décalage égal à la somme de la distance Lext et de la distance supplémentaire Lext$_c$ dès lors que ce décalage déplace ledit sommet vers l'extérieur du polygone en question.

Il est aussi proposé un programme d'ordinateur comportant des instructions pour implémenter le procédé évoqué ci-dessus selon l'un quelconque de ses modes de réalisation, lorsque lesdites instructions sont exécutées par un processeur. Il est aussi proposé un support de stockage d'informations stockant des instructions pour implémenter le procédé évoqué ci-dessus selon l'un quelconque de ses modes de réalisation, lorsque lesdites instructions sont lues depuis le support de stockage d'informations et exécutées par un processeur.

Il est aussi proposé un système de génération automatique de trajectoire pour amener un aéronef en vol depuis une position courante de l'aéronef à une destination ayant une position géoréférencée, ledit système comportant de la circuiterie électronique configurée pour implémenter les étapes suivantes : obtenir des polygones représentatifs d'obstacles potentiellement rencontrés par l'aéronef depuis la position courante de l'aéronef jusqu'à la destination, chaque polygone étant associé avec une couche d'altitude dans laquelle l'obstacle est inclus dans ledit polygone ; définir deux premiers cercles tangentiels par rapport à une direction actuelle de vol de l'aéronef, l'un étant centré à droite, l'autre étant centré à gauche, par rapport à la position courante de l'aéronef, le rayon des premiers cercles étant un rayon minimum de virage que peut effectuer l'aéronef au regard de son état opérationnel ; définir deux deuxièmes cercles tangentiels par rapport à une direction à suivre à destination, l'un étant centré à droite, l'autre étant centré à gauche, par rapport à la position géoréférencée de la destination ; définir un troisième cercle autour de sommets de dits polygones, de rayon égal au maximum entre une marge latérale prédéterminée et un rayon de virage que peut effectuer l'aéronef au regard de sa vitesse à l'arrivée au sommet du polygone, des premiers et deuxièmes cercles ; rechercher une trajectoire latérale volable entre la position courante de l'aéronef et la destination en contournant les polygones par les sommets en recherchant des trajectoires tangentielles entre lesdits cercles, en respectant un profil de trajectoire verticale préétabli, la direction actuelle de vol de l'aéronef et la direction à suivre à destination, ainsi que la marge latérale prédéterminée et une marge verticale prédéterminée avec les polygones ; et pour au moins une arête de polygone, le système comporte de la circuiterie électronique configurée pour implémenter les étapes suivantes :

- calculer une distance entre la position courante de l'aéronef et chaque arête de polygone ;
- lorsque le profil de trajectoire verticale correspond à une montée, déterminer en fonction du profil de trajectoire verticale si, après avoir parcouru la distance à l'arête diminuée de la marge latérale, l'altitude de l'aéronef est supérieure à celle de ladite arête plus la marge verticale, et si tel est le cas, exclure l'arête de la recherche de trajectoire latérale volable ; ou
- lorsque le profil de trajectoire verticale correspond à une descente, déterminer en fonction du profil de trajectoire verticale si, après avoir parcouru la distance à l'arête augmentée de la marge latérale, l'altitude de l'aéronef est inférieure à celle d'une couche d'altitude en dessous de ladite arête plus la marge verticale, et si tel est le cas, exclure l'arête de la recherche de trajectoire latérale volable.

Il est aussi proposé une avionique intégrant un système de génération automatique de trajectoire évoqué ci-dessus. Il est aussi proposé un aéronef comportant cette avionique.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement, en vue de côté, un aéronef équipé d'un système de génération automatique de trajectoire ;
[Fig. 2] illustre schématiquement le système de génération automatique de trajectoire ;
[Fig. 3] illustre schématiquement un exemple d'architecture matérielle du système de génération automatique de trajectoire ;
[Fig. 4] illustre schématiquement un algorithme de simplification d'ensemble de polygones ;
[Fig. 5A] illustre schématiquement un exemple de polygones d'élévation de terrain à simplifier ;
[Fig. 5B] poursuit l'exemple de la Fig. 5A après une opération de dilatation ;
[Fig. 5C] poursuit l'exemple des Figs. 5A et 5B après une opération de rétractation ;
[Fig. 6A] illustre schématiquement un exemple d'un polygone d'élévation de terrain, dont les arêtes sont simplifiées ;
[Fig. 6B] illustre schématiquement un exemple d'une forme de polygone d'élévation de terrain, dont les arêtes ne sont pas simplifiées ;

[Fig. 7] illustre schématiquement, en vue de côté, une marge verticale à respecter pour pouvoir considérer une trajectoire comme volable ;

[Fig. 8] illustre schématiquement, en vue de dessus, une marge latérale à respecter pour pouvoir considérer une trajectoire comme volable ;

[Fig. 9] illustre schématiquement un algorithme de préparation à une recherche de trajectoire latérale ;

[Fig. 10A] illustre schématiquement un premier exemple de profil de trajectoire verticale ;

[Fig. 10B] illustre schématiquement un deuxième exemple de profil de trajectoire verticale ;

[Fig. 10C] illustre schématiquement un troisième exemple de profil de trajectoire verticale ;

[Fig. 10D] illustre schématiquement un quatrième exemple de profil de trajectoire verticale ;

[Fig. 10E] illustre schématiquement un cinquième exemple de profil de trajectoire verticale ;

[Fig. 11] illustre schématiquement un algorithme de recherche de trajectoire latérale ;

[Fig. 12A] illustre schématiquement un premier motif de trajectoire entre une position courante de l'aéronef et une destination à atteindre ;

[Fig. 12B] illustre schématiquement un deuxième motif possible de trajectoire entre une position courante de l'aéronef et une destination à atteindre ;

[Fig. 12C] illustre schématiquement un troisième motif possible de trajectoire entre une position courante de l'aéronef et une destination à atteindre ;

[Fig. 12D] illustre schématiquement un quatrième motif possible de trajectoire entre une position courante de l'aéronef et une destination à atteindre ;

[Fig. 13A] illustre schématiquement un algorithme de départ de recherche par contournement de sommets de polygones ;

[Fig. 13B] illustre schématiquement un algorithme itératif de poursuite de recherche par contournement de sommets de polygones ;

[Fig. 14A] illustre schématiquement un premier exemple d'extension de trajectoire par contournement de sommet de polygone ;

[Fig. 14B] illustre schématiquement un deuxième exemple d'extension de trajectoire par contournement de sommet de polygone ;

[Fig. 15A] illustre schématiquement un premier exemple de prise en compte du profil de trajectoire verticale ;

[Fig. 15B] illustre schématiquement un deuxième exemple de prise en compte du profil de trajectoire verticale ;

[Fig. 16A] illustre schématiquement, en vue en coupe, un ensemble de polygones qui représentent, par couche d'altitude, un obstacle de relief de terrain en comparaison avec une altitude d'aéronef ;

[Fig. 16B] illustre schématiquement, en vue en coupe, un ensemble de polygones qui représentent, par couche d'altitude, un obstacle de relief de terrain en comparaison avec un intervalle d'altitude d'aéronef ;

[Fig. 17] illustre schématiquement une sélection de polygones, par couches d'altitude, en fonction du profil de trajectoire verticale de la Fig. 10C ;

[Fig. 18] illustre schématiquement une sélection de polygones, par couches d'altitude, en fonction du profil de trajectoire verticale de la Fig. 10B ;

[Fig. 19] illustre schématiquement une différence entre une distance définie relativement à des sommets de polygone et une distance définie relativement à l'arête de polygone reliant ces sommets ;

[Fig. 20] illustre schématiquement une extension de dimensions d'un polygone pour prendre en compte un déplacement d'obstacle ; et

[Fig. 21] illustre schématiquement un angle maximum de contournement de sommet de polygone pour prendre en compte un déplacement d'obstacle.

EXPOSE DETAILLE DE MODES DE REALISATION

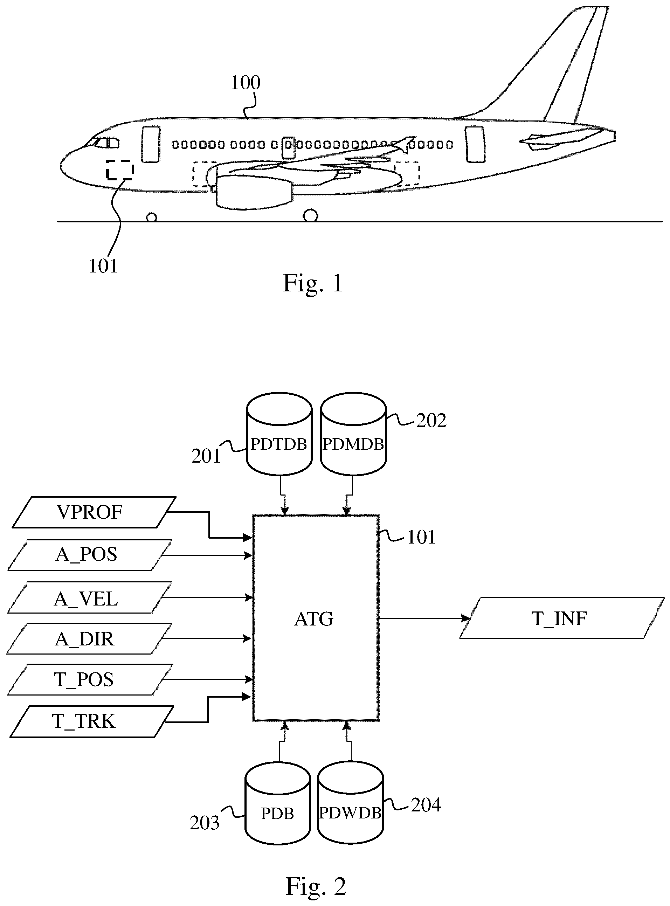

La **Fig. 1** illustre schématiquement, en vue de côté, un aéronef 100 équipé d'un système de génération automatique de trajectoire ATG (« Automatic Trajectory Generator » en anglais) 101.

Le système ATG 101 est un équipement électronique embarqué. Par exemple, le système ATG 101 fait partie d'une circuiterie électronique de l'avionique de l'aéronef 100. Préférentiellement, le système ATG 101 est intégré à un calculateur de l'aéronef 100, par exemple le système de gestion de vol FMS (« Flight Management System » en anglais) de l'aéronef 100 ou un autre système de calcul de trajectoire distinct du système de gestion de vol FMS.

Le système ATG 101 est un système d'assistance au pilotage pour déterminer en temps-réel une trajectoire sûre (« safe » en anglais), volable, à suivre pour amener l'aéronef 100 lorsque celui-ci est en vol, depuis sa position géographique courante, jusqu'à une destination géoréférencée, comme par exemple un aéroport ou la position courante d'un porte-avions.

Le système ATG 101 est schématiquement illustré sur la **Fig. 2.** Le système ATG 101 est configuré pour prendre en entrée un ensemble d'informations fournies par l'avionique : la position géographique courante de l'aéronef 100 (notée A_POS), la vélocité ou vitesse courante de l'aéronef 100 (notée A_VEL), la direction de vol actuelle de l'aéronef 100 (notée A_DIR) telle que définie par l'attitude (« attitude » en anglais) de l'aéronef 100, une information de position géographique de la destination (notée T_POS) et une information de direction à suivre à destination (notée T_TRK). Le système ATG 101 est configuré pour prendre en outre en entrée un profil de trajectoire verticale à respecter jusqu'à destination (noté VPROF). Le système ATG 101 est configuré pour fournir en sortie une information de trajectoire (notée T_INF).

Il est rappelé ici qu'une trajectoire volable est une trajectoire qui en tout point présente une marge de distance minimale (ou prédéterminée) par rapport à tout obstacle identifié (relief...) et que peut suivre l'aéronef 100 compte tenu de son état opérationnel (dépressurisation éventuelle, perte d'un moteur...).

Pour déterminer l'information de trajectoire T_INF, le système ATG 101 dispose en outre d'informations fournies par un ensemble de bases de données. Plus particulièrement : une base de données PDTDB (pour « Polygon Digital Terrain DataBase » en anglais) 201, qui fournit des informations d'élévation de terrain sous forme de polygones par tranches d'altitude ; une base de données PDMDB (pour « Polygon Digital Military DataBase » en anglais) 202, qui fournit des informations de géoréférencement, préférentiellement par tranches d'altitude, sous forme de polygones de zones militaires dont le survol est interdit ; une base de données PDWDB (pour « Polygon Digital Weather DataBase » en anglais) 204, qui fournit des informations géoréférencées sous forme de polygones, préférentiellement par tranches d'altitude, de zones à éviter à cause des conditions météorologiques (nuages d'orage...) ; et une base de données PDB (pour « Performance DataBase » en anglais) 203, qui fournit des informations de performances de l'aéronef 100 selon son état opérationnel.

Les bases de données susmentionnées peuvent être totalement intégrées à un système informatique de l'aéronef 100. Avant le décollage, les bases de données sont mises à jour, par exemple grâce à une sacoche de vol électronique EFB (« Electronic Flight Bag » en anglais). Les bases de données peuvent être intégrées à un système informatique au sol, par exemple un centre informatique d'une compagnie aérienne pour lequel opère l'aéronef 100. La mise à jour des bases de données est alors réalisée grâce à des communications sol - air AGC (« Air - Ground Communications » en anglais). Ces deux approches peuvent être combinées, avec un pré-chargement des bases de données avant le décollage et des mises à jour en vol, par exemple pour prendre en compte des évolutions de données en temps-réel (conditions météo...).

La base de données PDTDB 201 contient des descripteurs de polygones représentant des couches de terrain. Chaque polygone est ainsi associé à une couche d'altitude (entre une borne inférieure de couche et une borne supérieure de couche). L'ensemble des polygones est une quantification (approximation) du terrain et englobe entièrement le terrain réel, ce qui signifie que si une trajectoire évite ces obstacles polygonaux, l'application de cette trajectoire dans le monde réel évite également le relief du terrain.

Les polygones représentant une couche de terrain doivent le faire fidèlement, ce qui signifie qu'ils ne peuvent pas agrandir le terrain au point que des zones volables soient considérées comme des obstacles et que des trajectoires sûres soient alors considérées comme dangereuses et rejetées par le système ATG 101. De plus, vus de dessus, les polygones représentant le terrain d'une couche doivent être entièrement entourés par les polygones représentant le terrain dans les couches inférieures. Cette exigence est nécessaire pour supposer que plus un aéronef est haut, moins le relief du terrain est contraignant, ce qui permet d'effectuer des simplifications de calcul qui accélèrent la recherche de trajectoires.

De la même manière, les zones militaires de la base de données PDMDB 202 et les obstacles météorologiques de la base de données PDWDB 204 sont représentés sous forme de polygones qui résultent d'une quantification (approximation) de ces zones militaires et de ces obstacles météorologiques. Par exemple, un polygone représentant un obstacle de type nuages d'orage est associé à une ou plusieurs couches d'altitude, permettant ainsi d'explorer des trajectoires passant au-dessus ou en dessous dudit obstacle météorologique.

Dans le cas des zones militaires, une variable est préférentiellement associée avec les descripteurs des polygones correspondants et indique si la zone militaire est ouverte (survol autorisé) ou fermée (survol interdit). Cette variable peut être transmise par voie radio à l'aéronef 100 en vol pour notifier un changement de statut (ouverte / fermée) de telle ou telle zone militaire en temps-réel.

Chaque polygone est défini par ses arêtes (« edges » en anglais) et est associé à une altitude plancher et une altitude plafond (couche). Par conséquent, les bases de données stockent des descripteurs de polygone, comportant des descripteurs d'arête incluant par exemple les informations suivantes :

- Longitude et latitude d'un sommet de l'arête
- Longitude et latitude de l'autre sommet de l'arête
- Altitude plancher de la couche
- Altitude plafond de la couche
- Identifiant de polygone auquel appartient l'arête
- Identifiant d'arête au sein du polygone.

Chaque descripteur de polygone peut ainsi être constitué de descripteurs d'arêtes consécutifs, préférentiellement présentés, de manière ordonnée, selon le sens horaire ou dans le sens antihoraire de parcours de la périphérie du polygone en question.

Dans le cas d'obstacles météorologiques, les descripteurs de polygones correspondants contiennent par exemple les informations suivantes :

- Horodatage
- Vitesse globale de l'obstacle, avec direction de déplacement
- Facteur de croissance.

De plus, pour plus de précisions, chaque descripteur d'arête du polygone d'obstacle météorologique peut contenir une information de vélocité, ou vitesse, de chaque sommet de l'arête. Ainsi, grâce à ces informations, le système ATG 101 est apte à extrapoler, à partir de l'instant donné par l'horodatage et grâce à un modèle météorologique, des changements dynamiques de forme des polygones en question.

Des informations supplémentaires peuvent potentiellement être stockées si elles sont utilisées fréquemment et si cela permet de gagner du temps de calcul. Par exemple, chaque descripteur d'arête peut indiquer si le polygone est convexe ou concave au premier sommet, ou si l'arête appartient ou non à une enveloppe convexe du polygone.

Ainsi, lorsque le système ATG 101 effectue en temps-réel un calcul d'une trajectoire à suivre pour faire transiter l'aéronef 100 depuis une position géographique courante en vol, vers une destination géoréférencée, le système ATG 101 manipule des polygones comme divulgué ci-après.

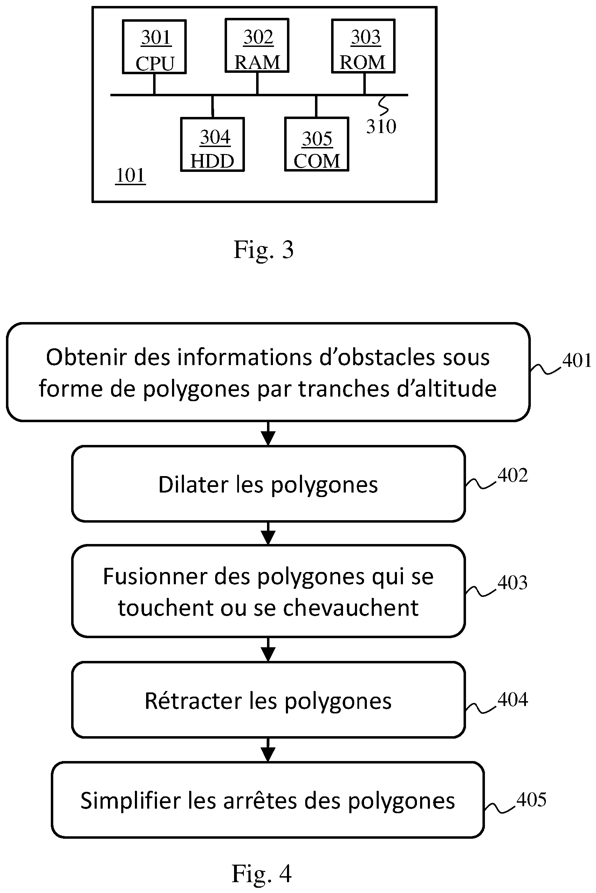

La Fig. 3 illustre schématiquement un exemple d'architecture matérielle du système ATG 101, qui comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface de communication 305 permettant au système ATG 101 d'interagir dans l'avionique de l'aéronef 100.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication (non représenté). Lorsque le système ATG 101 est mis sous tension, le processeur 301 est capable de lire de la RAM 302 des instructions et de les exécuter. Ces instructions forment un programme d'ordinateur causant la mise en œuvre, par le processeur 301, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système ATG 101 comprend de la circuiterie électronique agencée et configurée pour implémenter les comportements, étapes et algorithmes décrits ici.

Pour effectuer le calcul de trajectoire, le système ATG 101 manipule les polygones de manière à limiter la quantité de trajectoires candidates étudiées.

Ainsi, la **Fig. 4** illustre schématiquement un algorithme de simplification d'ensemble de polygones implémenté, dans un mode de réalisation particulier, par le système ATG 101 pour potentiellement fusionner certains polygones. Le système ATG 101 effectue une opération de dilatation - rétractation, qui permet de fusionner les polygones qui sont trop proches les uns des autres pour permettre en réalité de faire naviguer l'aéronef 100 entre les obstacles qu'ils représentent, tout en respectant un couloir de protection. Ces opérations de dilatation, fusion et rétractation des polygones sont préférentiellement réalisées en amont d'une recherche de trajectoire volable pour l'aéronef 100, et non pas en temps réel, afin de limiter les temps de calculs.

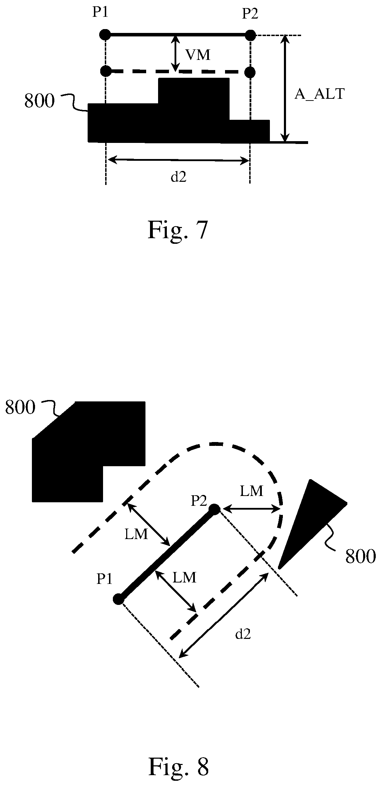

En effet, une marge latérale LM doit être respectée latéralement dans le calcul de trajectoire par rapport aux obstacles à éviter, comme illustré sur la **Fig. 8** où, sur une distance d2 depuis un point P1 jusqu'à un point P2, la marge latérale LM est libre de tout obstacle 800. La marge latérale LM peut être prédéterminée ou variable en fonction de l'altitude, du mode de vol de l'aéronef 100 ou de la zone géographique par exemple. Par ailleurs, une marge verticale VM doit aussi être respectée verticalement dans le calcul de trajectoire par rapport aux obstacles à éviter, comme illustré sur la **Fig. 7** où, sur la distance d2 depuis le point P1 jusqu'au point P2, la marge verticale VM est libre de tout obstacle 800. La marge verticale VM et la marge latérale LM sont des valeurs prédéfinies qui permettent d'assurer une sûreté de navigation aux instruments, c'est-à-dire d'assurer une trajectoire sûre, volable.

Dans une étape 401, comme déjà décrit, le système ATG 101 obtient des informations d'obstacles sous forme de polygones par tranches d'altitude.

Dans une étape 402, le système ATG 101 dilate les polygones. En d'autres termes, le système ATG 101 agrandit les polygones dans toutes les directions (dans la couche considérée). Dans chaque direction, la marge latérale LM est ajoutée.

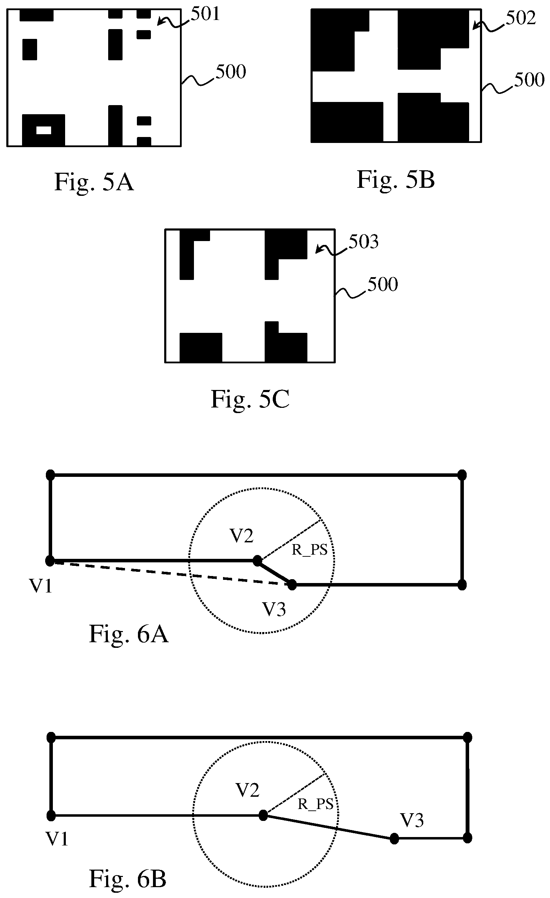

Puis, dans une étape 403, pour chaque couche, le système ATG 101 fusionne les polygones qui se touchent ou se chevauchent (par couche d'altitude). A titre d'exemple, la **Fig. 5B** montre schématiquement un ensemble de polygones 502 dans une zone prédéterminée 500, qui résulte de la dilation et de la fusion d'un ensemble de polygones 501 schématiquement illustré sur la **Fig. 5A.**

Et dans une étape 404, le système ATG 101 rétracte les polygones, après les éventuelles fusions, de la même proportion que dans l'étape 402. A titre d'exemple, la **Fig. 5C** montre schématiquement un ensemble de polygones 503, qui résulte de la rétractation de l'ensemble de polygones 502 schématiquement illustré sur la Fig. 5B.

Ainsi, la quantité de polygones à manipuler est réduite, sans pour autant renoncer à des trajectoires qui seraient volables. Les étapes 402, 403 et 404 permettent ainsi de simplifier la représentation du terrain autour de l'aéronef 100, en ne gardant que les obstacles entre lesquels l'aéronef 100 peut naviguer. Le système ATG 101 évite d'étudier des trajectoires de contournement d'obstacle qui ne permettraient pas de respecter le couloir de protection.

Dans une étape 405, le système ATG 101 cherche à simplifier les arêtes des polygones. Selon une configuration, le système ATG 101 identifie tous les sommets de polygones qui se trouvent dans une partie concave du polygone. Le système ATG 101 détermine, pour chacun d'eux, si au moins un de ses deux sommets voisins se trouve à une distance inférieure à un seuil de simplification (cercle de rayon R_PS sur les Figs. 6A et 6B). Si tel est le cas, le système ATG 101 supprime la concavité et relie directement lesdits deux sommets voisins ; sinon, le système ATG 101 conserve la forme du polygone. La **Fig. 6A** illustre schématiquement un polygone où un sommet V2 est dans une concavité entre un sommet V1 et un sommet V3. Le sommet V3 est à une distance du sommet V2 inférieure au seuil de simplification R_PS. Dans ce cas, le système ATG 101 supprime les arêtes qui relient le sommet V1 au sommet V2 et le sommet V2 au sommet V3, et crée en remplacement une arête qui relie directement le sommet V1 au sommet V2. Le sommet V2 disparaît alors. La **Fig. 6B** illustre schématiquement un polygone où le sommet V3 est à une distance du sommet V2 supérieure au seuil de simplification R_PS. Ici, le sommet V2 est conservé. Bien entendu, l'invention n'est pas limitée à cette configuration de simplification des arêtes des polygones. La configuration présentée ici est un exemple concret pour le cas de sommets de polygones qui se trouvent dans une partie concave du polygone et selon un critère de distance aux voisins.

Ainsi, les polygones à manipuler sont de formes plus simples, et ont moins de sommets, ce qui réduit la quantité de trajectoires candidates à étudier. Cette simplification des arêtes de polygone est optionnelle et peut être effectuée indépendamment des opérations de dilatation - fusion- rétractation.

Afin de pouvoir fournir une trajectoire volable qui soit facile à suivre aux instruments de navigation, le système ATG 101 construit des trajectoires candidates composées uniquement de segments de ligne et d'arcs de cercle dont le rayon est conforme aux performances de l'aéronef 100 telles que récupérées dans la base de données PDB 203.

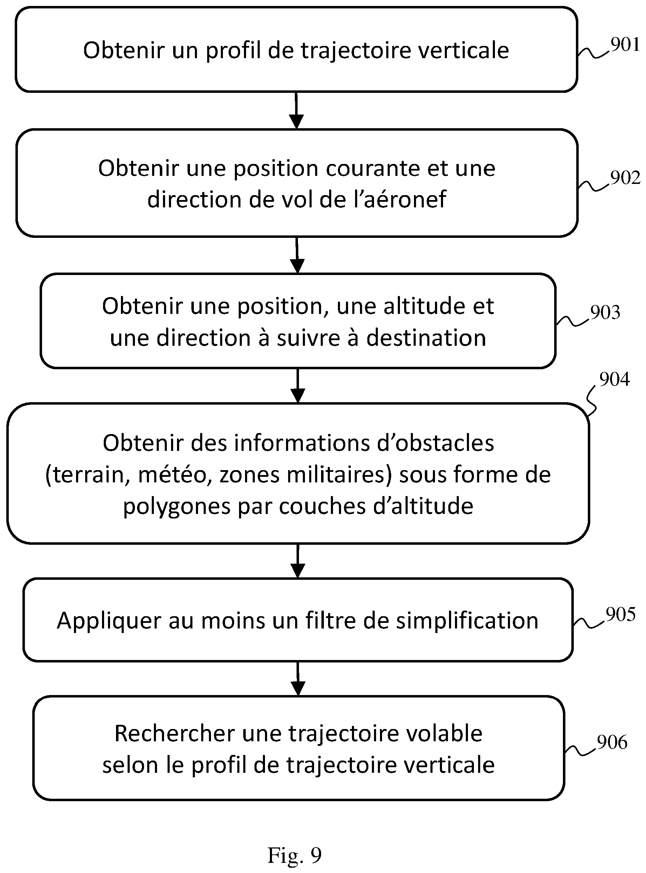

La **Fig. 9** illustre schématiquement un algorithme de préparation à une recherche de trajectoire latérale.

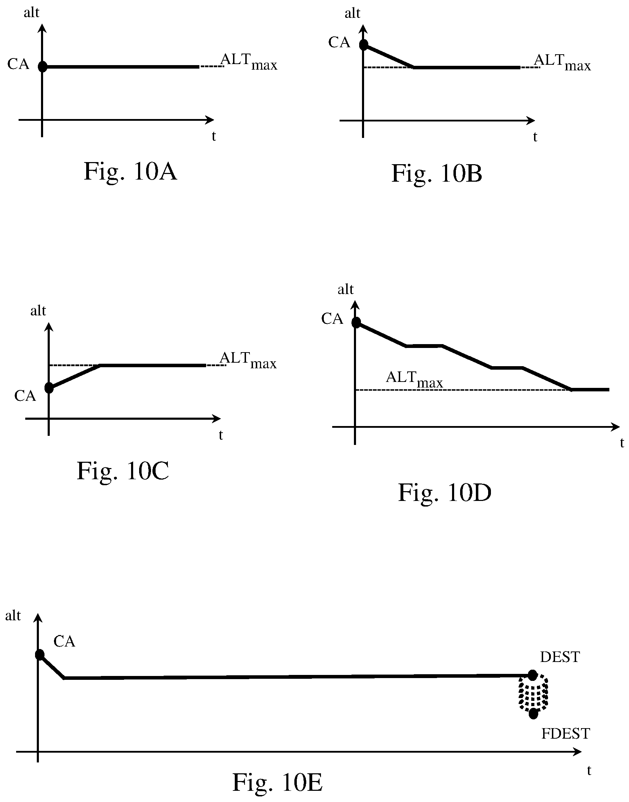

Dans une étape 901, le système ATG 101 obtient un profil de trajectoire verticale. Le profil de trajectoire verticale à respecter est préétabli. Le profil de trajectoire verticale définit les variations d'altitude attendues par l'aéronef 100. Par exemple, si une dépressurisation cabine est en cours, le système ATG 101 doit prendre en compte une descente par paliers afin d'amener l'aéronef 100 à une altitude maximale $ALT_{max}$ définie au regard de l'état opérationnel de l'aéronef 100. La **Fig. 10A** illustre schématiquement un premier exemple de profil de trajectoire verticale. Dans cet exemple, aucun changement d'altitude n'est opéré et l'altitude courante CA (« Current Altitude » en anglais) de l'aéronef 100 est maintenue par exemple à la valeur d'altitude maximale $ALT_{max}$. Si l'altitude courante CA de l'aéronef 100 est supérieure à l'altitude maximale $ALT_{max}$ définie au regard de l'état opérationnel de l'aéronef 100, le profil de trajectoire verticale descend pour amener l'aéronef 100 à voler à l'altitude maximale $ALT_{max}$ autorisée, comme illustré schématiquement sur la **Fig. 10B**. Si l'altitude actuelle CA de l'aéronef 100 est inférieure à l'altitude maximale $ALT_{max}$ autorisée, le profil de trajectoire verticale peut monter pour amener l'aéronef 100 à voler à l'altitude maximale $ALT_{max}$ et faire face à un environnement (relief de terrain particulièrement) moins contraignant, comme illustré schématiquement sur la **Fig. 10C**. Dans le cas où l'altitude maximale $ALT_{max}$ est inférieure à l'altitude actuelle CA de l'aéronef 100 en raison d'une dépressurisation cabine, le profil de trajectoire verticale intègre des procédures de dépressurisation de cabine et respecte une descente par paliers, comme illustré schématiquement sur la **Fig. 10D**. Comme illustré sur la **Fig. 10E,** le profil de trajectoire verticale peut prendre en compte une quantité d'itérations d'un schéma de circuit d'attente (voir en pointillés sur la Fig. 10E) entre la destination (notée DEST) pour laquelle une trajectoire latérale est à trouver et la destination finale (notée FDEST) qui se trouve au-dessous. Dans une autre réalisation, le profil de trajectoire verticale peut intégrer une trajectoire de descente.

Dans une étape 902, le système ATG 101 obtient la position courante A_POS de l'aéronef 100, la direction de vol A_DIR de l'aéronef 100, ainsi que la vitesse courante A_VEL de l'aéronef 100. La vitesse courante A_VEL de l'aéronef 100 permet de déterminer le rayon du premier virage.

Dans une étape 903, le système ATG 101 obtient la position T_POS de la destination DEST, ainsi que son altitude et la direction à suivre T_TRK à destination.

Dans une étape 904, le système ATG 101 obtient des informations d'obstacles (terrain, météo, zones militaires) sous forme de polygones par couches d'altitude. Ces informations sous forme de polygones sont obtenues auprès des bases de données PDTDB 201, PDMDB 202 et PDWDB 204 précédemment évoquées. Par exemple, le système ATG 101 obtient des informations d'obstacles présents dans une zone géographique de surface prédéterminée qui inclut la position actuelle de l'aéronef 100 et la position de la destination. Cette zone géographique est de préférence la plus petite possible, de sorte à obtenir les informations d'obstacles présents dans une zone géographique minimale incluant la position actuelle de l'aéronef 100 et la position de la destination.

Dans une étape 905 optionnelle, le système ATG 101 applique au moins un filtre de simplification des polygones à éviter dans le calcul de trajectoire. Par exemple, un tel filtre est réalisé grâce aux opérations de dilatation-fusion-rétractation de polygones et/ou de simplification des arêtes de polygone déjà décrites en relation avec les Figs. 4, 5A, 5B, 5C, 6A et 6B. D'autres filtres de simplification peuvent être appliqués, comme détaillé par la suite. Des filtres de simplification peuvent notamment être appliqués au fur et à mesure d'une recherche de trajectoire volable. De préférence, ces filtrages, qui peuvent nécessiter des temps de calculs importants, sont réalisés au sol, au préalable à un vol, lors de la construction de la base de données PDTDB 201.

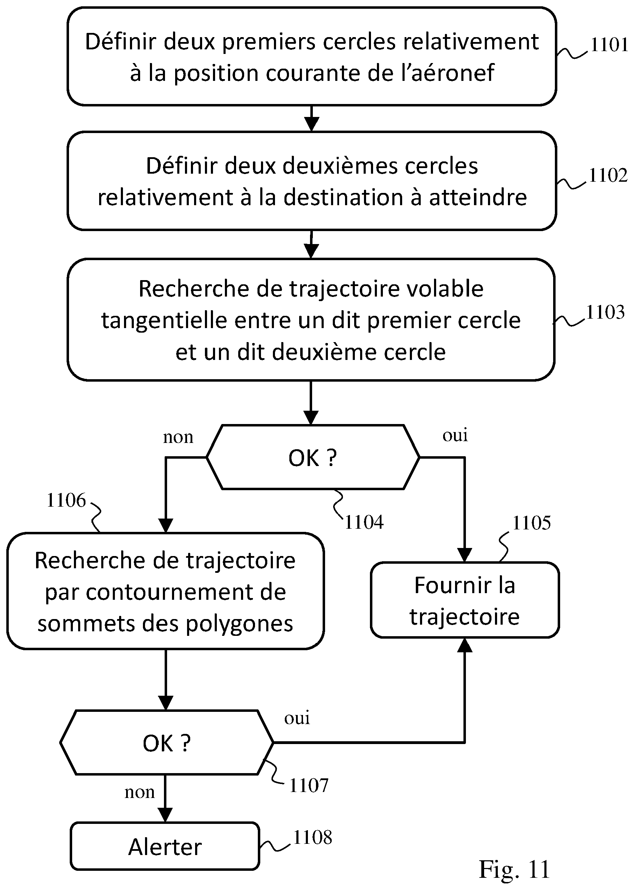

Dans une étape 906, le système ATG 101 recherche une trajectoire volable depuis la position courante A_POS de l'aéronef jusqu'à la position de la destination T_POS, en suivant le profil de trajectoire verticale obtenu à l'étape 901, et en évitant donc les obstacles représentés par les polygones obtenus à l'étape 904. La recherche de trajectoire tient compte de la direction actuelle A_DIR de vol de l'aéronef 100, ainsi que de la direction à suivre T_TRK à destination, et des performances de l'aéronef 100 au regard de son état opérationnel. Un mode de réalisation particulier est détaillé ci-après en relation avec la Fig. 11.

La **Fig. 11** illustre schématiquement un algorithme de recherche de trajectoire latérale.

Dans une étape 1101, le système ATG 101 définit deux premiers cercles, de rayon prédéterminé dépendant des performances de l'aéronef 100, tangentiels par rapport à la direction actuelle A_DIR de vol de l'aéronef 100, l'un étant centré à droite, l'autre étant centré à gauche, par rapport à la position courante A_POS de l'aéronef 100. L'aéronef 100 peut tourner soit à droite, soit à gauche, par rapport à la direction actuelle A_DIR de vol de l'aéronef 100. Le rayon des premiers cercles est égal au rayon minimum de virage que peut effectuer l'aéronef 100 au regard de son état opérationnel.

Dans une étape 1102, le système ATG 101 définit deux deuxièmes cercles, de même rayon prédéterminé dépendant des performances de l'aéronef 100, tangentiels par rapport à la direction à suivre T_TRK à destination, l'un étant centré à droite, l'autre étant centré à gauche, par rapport à la position T_POS de la destination. La direction à suivre T_TRK à destination définit le sens possible de parcours desdits deuxièmes cercles par l'aéronef 100. Selon une configuration, le rayon des deuxièmes cercles est égal au rayon des premiers cercles. Selon une autre configuration, le rayon des deuxièmes cercles est différent du rayon des premiers cercles. Le rayon des deuxièmes cercles est calculé à partir de la vitesse ou des performances de l'aéronef 100 prévues à l'arrivée auxdits deuxièmes cercles. La vitesse de l'aéronef 100 prévue à l'arrivée aux deuxièmes cercles est déterminée à partir d'un profil de vitesse qui est fonction de l'altitude de l'aéronef 100. En effet, l'altitude à laquelle l'aéronef 100 arrive aux deuxièmes cercles est déterminée en utilisant la distance entre l'aéronef 100 et ces deuxièmes cercles comme entrée du profil de trajectoire verticale, et en fonction de la distance parcourue par l'aéronef 100. Autrement dit, sachant la distance entre l'aéronef 100 et les deuxièmes cercles, la vitesse de l'aéronef 100 à l'arrivée aux deuxièmes cercles, qui dépend de l'altitude, est déterminée sur la base du profil de trajectoire verticale en fonction de la distance parcourue. En ayant la vitesse de l'aéronef 100, le système ATG 101 peut déduire le rayon des deuxièmes cercles.

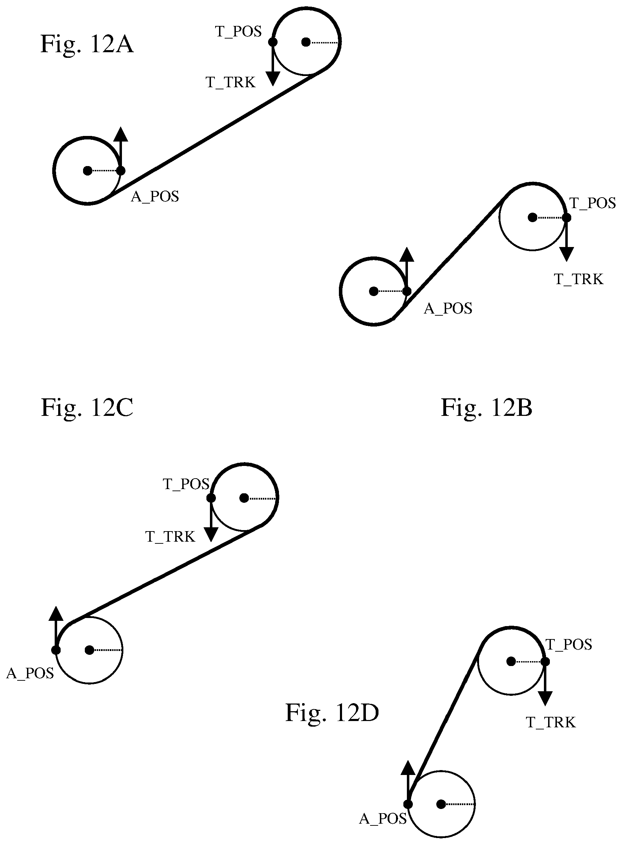

Dans une étape 1103, le système ATG 101 recherche une trajectoire volable tangentielle entre un dit premier cercle défini à l'étape 1101 et un dit deuxième cercle défini à l'étape 1102, en respectant la direction actuelle A_DIR de vol de l'aéronef 100 et la direction à suivre T_TRK à destination. Cette recherche de trajectoire s'effectue en respectant le profil de trajectoire verticale obtenu à l'étape 901. En considérant qu'il n'y a pas d'obstacle entre la position courante A_POS de l'aéronef 100 et la position T_POS de la destination, les trajectoires possibles sont schématiquement illustrées sur les Figs. 12A à 12D.

Sur la **Fig. 12A,** la trajectoire est telle que l'aéronef 100 effectue un virage à gauche depuis la position A_POS, suit le premier cercle centré à gauche par rapport à la position A_POS, suit ensuite une tangente vers le deuxième cercle centré à gauche par rapport à la position T_POS et effectue un virage à gauche en suivant ledit deuxième cercle jusqu'à la position T_POS de la destination. Sur la **Fig. 12B,** la trajectoire est telle que l'aéronef 100 effectue un virage à gauche depuis la position A_POS, suit le premier cercle centré à gauche par rapport à la position A_POS, suit ensuite une tangente vers le deuxième cercle centré à droite par rapport à la position T_POS et effectue un virage à droite en suivant ledit deuxième cercle jusqu'à la position T_POS de la destination. Sur la **Fig. 12C,** la trajectoire est telle que l'aéronef 100 effectue un virage à droite depuis la position A_POS, suit le premier cercle centré à droite par rapport à la position A_POS, suit ensuite une tangente vers le deuxième cercle centré à gauche par rapport à la position T_POS et effectue un virage à gauche en suivant ledit deuxième cercle jusqu'à la position T_POS de la destination. Sur la **Fig. 12D,** la trajectoire est telle que l'aéronef 100 effectue un virage à droite depuis la position A_POS, suit le premier cercle centré à droite par rapport à la position A_POS, suit ensuite une tangente vers le deuxième cercle centré à droite par rapport à la position T_POS et effectue un virage à droite en suivant ledit deuxième cercle jusqu'à la position T_POS de la destination.

A noter que, il est toujours possible de permettre à l'aéronef 100 d'effectuer un virage à gauche autant qu'un virage à droite au début de la recherche de trajectoire. Si l'aéronef 100 est en cours de virage à droite, et qu'il est souhaité que l'aéronef 100 fasse ensuite un virage à gauche, une marge est introduite pour permettre une recherche de trajectoire avec un virage à gauche. Une expansion commençant par un virage de l'aéronef 100 qui n'est pas en accord avec l'arrivée au sommet du polygone n'est toutefois pas possible.

Dans une étape 1104, le système ATG 101 vérifie si une ou plusieurs trajectoires volables ont été trouvées à l'étape 1103. Si tel est le cas, une étape 1105 est effectuée ; sinon, une étape 1106 est effectuée.

Dans l'étape 1105, le système ATG 101 fournit une trajectoire, telle que trouvée à l'étape 1103, qui permet de faire transiter l'aéronef 100 selon le profil de trajectoire verticale à respecter, depuis sa position géographique courante en vol A_POS vers la position de la destination T_POS. Si plusieurs trajectoires volables ont été trouvées, le système ATG 101 en sélectionne une en appliquant au moins un critère prédéterminé. Typiquement, le système ATG 101 sélectionne la trajectoire la plus courte. Il est alors mis fin à l'algorithme de la Fig. 11.

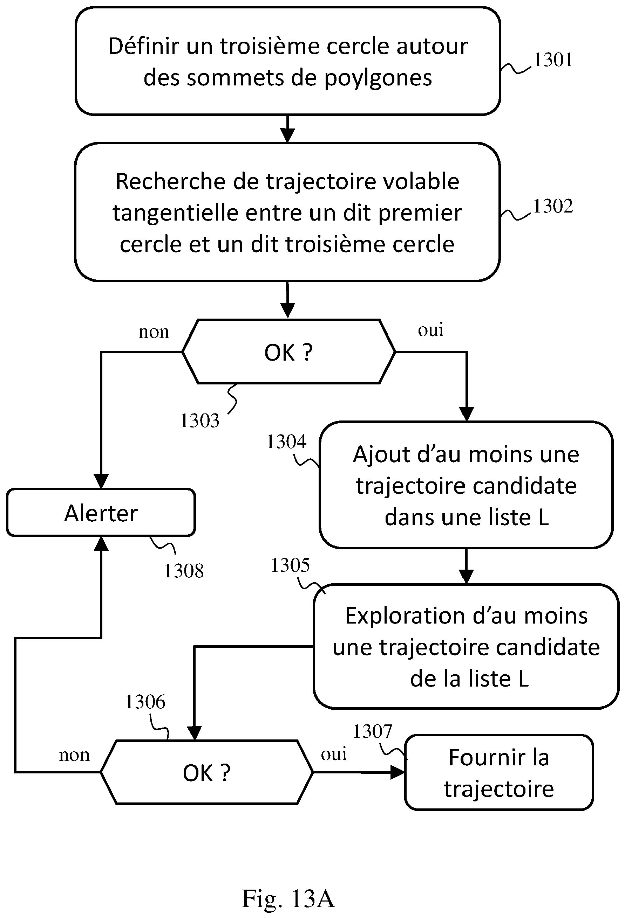

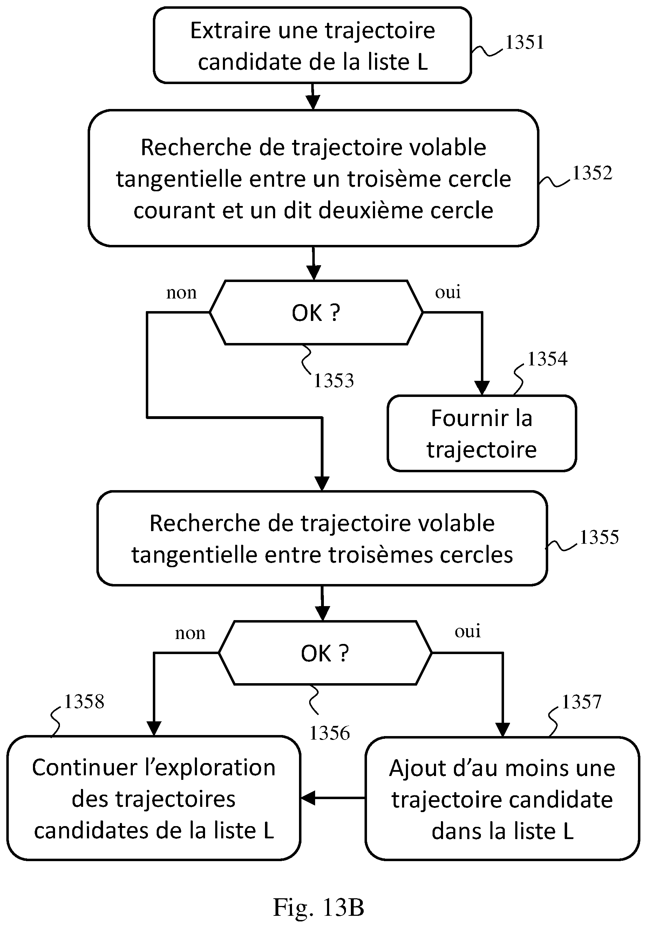

Dans l'étape 1106, le système ATG 101 effectue une recherche de trajectoire volable, depuis sa position géographique courante en vol A_POS vers la position de la destination T_POS, par contournement de sommets des polygones. Cet aspect est détaillé ci-après en relation avec les Figs. 13A et 13B.

Dans une étape 1107, le système ATG 101 vérifie si une trajectoire volable par contournement de sommets des polygones a été trouvée à l'étape 1106. Si tel est le cas, l'étape 1105 est effectuée ; sinon, une étape 1108 est effectuée.

Dans l'étape 1108, le système ATG 101 alerte qu'aucune trajectoire latérale n'a pu être trouvée pour rejoindre la destination dans les conditions données. Le système ATG 101 ne peut pas trouver de trajectoire volable pour permettre de rejoindre, depuis la position courante et d'après l'attitude de l'aéronef 100, la position de la destination T_POS tout en respectant la direction à suivre T_TRK à destination au vu des obstacles présents. Une autre destination doit alors être sélectionnée et/ou une autre direction à suivre à destination et/ou un autre profil de trajectoire verticale. Considérant par exemple qu'un système de calcul de trajectoire de l'avionique a accès à une base de données comprenant une liste ordonnée de destinations (e.g., aéroports) possibles, pour par exemple dérouter l'aéronef 100 en urgence suite à une dépressurisation cabine, le système de calcul de trajectoire soumet au système ATG 101 les destinations selon la liste ordonnée. Si le système ATG 101 est capable de trouver une trajectoire volable jusqu'à la destination soumise par le système de calcul de trajectoire, alors ladite trajectoire est programmée dans système de calcul de trajectoire et est suivie pour faire transiter l'aéronef 100 jusqu'à cette destination. Sinon, le système de calcul de trajectoire soumet au système ATG 101 la prochaine destination dans la liste ordonnée.

La **Fig. 13A** illustre schématiquement un algorithme de départ de recherche par contournement de sommets de polygones.

Dans une étape 1301, le système ATG 101 définit un troisième cercle autour des sommets des polygones représentatifs d'obstacles tels qu'obtenus à l'étape 904. Un filtrage peut être appliqué par le système ATG 101 de sorte à ne pas considérer tous les sommets de polygones représentatifs d'obstacles portés à la connaissance du système ATG 101 par les bases de données PDTDB 201, PDMDB 202 et PDWDB 204. Ce troisième cercle a un rayon qui est le maximum entre la marge latérale LM susmentionnée (définissant le couloir de protection) et le rayon minimum de virage dont est capable l'aéronef 100 au vu de ses performances telles que définies dans la base de données PDB 203, et notamment de sa vitesse à l'arrivée au sommet du polygone. En particulier, le rayon du troisième cercle à l'arrivée au sommet du polygone est au minimum égal à la marge latérale LM. Le rayon du troisième cercle au départ du sommet du polygone, lors de l'expansion suivante, est égal au maximum entre la marge latérale LM et le rayon minimum de virage dont est capable l'aéronef 100. Le rayon de chaque troisième cercle est ainsi calculé en fonction de la vitesse d'arrivée de l'aéronef 100 à ce virage. Le rayon du troisième cercle à l'arrivée au sommet du polygone peut être différent du rayon du troisième cercle au départ du sommet dudit polygone. Chaque troisième cercle a ainsi un rayon qui lui est propre, et le troisième cercle utilisé pour une expansion est donc différent du troisième cercle utilisé pour un sommet de polygone ciblé.

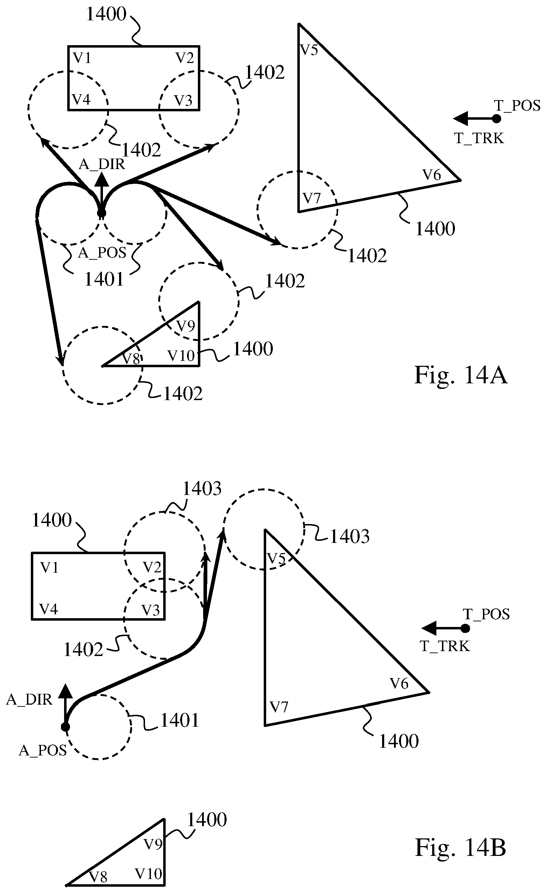

Dans une étape 1302, le système ATG 101 recherche une trajectoire volable tangentielle entre un dit premier cercle défini à l'étape 1101 et un dit troisième cercle défini à l'étape 1301, en respectant la direction courante A_DIR de vol de l'aéronef 100 et le profil de trajectoire verticale applicable. Comme précédemment, il est possible de rechercher une trajectoire volable à partir d'un virage à droite, ou d'un virage à gauche. Une dite trajectoire volable doit permettre de contourner le sommet de polygone en question au vu de la direction d'arrivée de l'aéronef 100 sur ledit sommet de polygone (ce qui définit donc le sens de parcours dudit troisième cercle). Un exemple est schématiquement illustré sur la **Fig. 14A.**

Sur la Fig. 14A, trois obstacles 1400 sont représentés à titre purement illustratif. Aucune trajectoire directe volable entre la position A_POS et la position T_POS, respectant en outre les directions A_DIR et T_TRK, n'existe. Un contournement d'un ou plusieurs obstacles est alors nécessaire. Sur la Fig. 14A sont représentés les premiers cercles 1401 définis à l'étape 1101. Y apparaissent aussi les troisièmes cercles 1402 pour un certain nombre de sommets V3, V4, V7, V8 et V9. Ce sont les sommets de polygones pour lesquels au moins une trajectoire volable tangentielle a été trouvée, comme illustré par les traits gras fléchés sur la Fig. 14A (certaines trajectoires volables tangentielles possibles ne sont pas représentées par souci de clarté du dessin). Ces trajectoires doivent être explorées plus avant pour trouver un chemin menant à la position de la destination T_POS. Pour les sommets V1, V2, V5, V6 et V10, aucune trajectoire volable tangentielle n'existe (à cause des obstacles présents et du respect de la marge latérale LM (notamment vis-à-vis du sommet V5).

Dans une étape 1303, le système ATG 101 vérifie si une ou plusieurs trajectoires volables ont été trouvées à l'étape 1302. Si tel est le cas, une étape 1304 est effectuée ; sinon, une étape 1308 est effectuée.

Dans l'étape 1304, le système ATG 101 ajoute chaque trajectoire trouvée à l'étape 1302 dans une liste L. Et dans une étape 1305, le système ATG 101 explore au moins une trajectoire candidate de la liste L, comme détaillé ci-après en relation avec la Fig. 13B. Ensuite, dans une étape 1306, le système ATG 101 vérifie si une ou plusieurs trajectoires volables ont été trouvées à l'étape 1305. Si tel est le cas, une étape 1307 est effectuée ; sinon, l'étape 1308 est effectuée.

Dans l'étape 1307, le système ATG 101 fournit une trajectoire, telle que trouvée à l'étape 1305, qui permet de faire transiter l'aéronef 100 selon le profil de trajectoire verticale à respecter, depuis sa position géographique courante en vol A_POS vers la position de la destination T_POS. Si plusieurs trajectoires volables ont été trouvées, le système ATG 101 en sélectionne une en appliquant au moins un critère prédéterminé. Typiquement, le système ATG 101 sélectionne la trajectoire la plus courte. L'étape 1307 est identique à l'étape 1105. Il est alors mis fin à l'algorithme de la Fig. 11.

Dans l'étape 1308, le système ATG 101 alerte qu'aucune trajectoire latérale n'a pu être trouvée pour rejoindre la destination dans les conditions données. L'étape 1306 est identique à l'étape 1108.

La **Fig. 13B** illustre schématiquement un algorithme itératif de poursuite de recherche par contournement de sommets de polygones (détail de l'étape 1305 de la Fig. 13A).

Dans une étape 1351, le système ATG 101 extrait une trajectoire candidate de la liste L.

Dans un mode de réalisation particulier, le système ATG 101 choisit dans la liste L la trajectoire candidate la plus prometteuse au regard d'une heuristique de recherche de chemin. Par exemple, une heuristique H de l'algorithme A* ou une de ses variantes, comme par exemple l'algorithme dit « any-time A* », est utilisée. Le système ATG 101 associe alors à chaque trajectoire dans la liste L une fonction de coût F telle que :

$$F = G + H$$

où G est la distance parcourue jusqu'à la fin actuelle de la trajectoire considérée et H est l'heuristique, qui sous-estime la distance encore à parcourir (H=0 pour une trajectoire volable qui se termine sur la destination). Le système ATG 101 extrait alors de la liste L la trajectoire candidate qui minimise la fonction de coût F.

Dans une étape 1352, le système ATG 101 recherche une trajectoire volable tangentielle entre le troisième cercle (cercle de départ d'une expansion, dont le rayon est égal au maximum entre la marge latérale LM et le rayon de virage que peut effectuer l'aéronef 100, ce rayon étant calculé à partir de la vitesse courante de l'aéronef 100 et en connaissant l'altitude de l'aéronef 100) sur lequel s'est arrêtée la trajectoire candidate et un dit deuxième cercle défini à l'étape 1102, en respectant la direction T_TRK à suivre à l'arrivée et le profil de trajectoire verticale applicable. Le système ATG 101 recherche ainsi si tous les obstacles ont été contournés et qu'une trajectoire volable directement jusqu'à la destination existe (dernière branche (« leg » en anglais) de trajectoire). Ce serait par exemple le cas à partir du troisième cercle qui entoure le sommet V5 sur la Fig. 14A, mais pas à partir du sommet V3.

Dans une étape 1353, le système ATG 101 vérifie si une ou plusieurs trajectoires volables ont été trouvées à l'étape 1352. Si tel est le cas, une étape 1354 est effectuée ; sinon, une étape 1355 est effectuée.

Dans l'étape 1354, le système ATG 101 fournit une trajectoire, telle que trouvée à l'étape 1352, qui permet de faire transiter l'aéronef 100 selon le profil de trajectoire verticale à respecter, depuis sa position géographique courante en vol A_POS vers la position de la destination T_POS. Si plusieurs trajectoires volables ont été trouvées, le système ATG 101 en sélectionne une en appliquant au moins un critère prédéterminé. Typiquement, le système ATG 101 sélectionne la trajectoire la plus courte. L'étape 1354 est identique aux étapes 1307 et 1105. Il est alors mis fin à l'algorithme de la Fig. 11. Dans un mode de réalisation particulier, le système ATG 101 vérifie s'il existe une trajectoire volable plus appropriée au regard dudit ou desdits critères prédéterminés. Dans ce cas, le système ATG 101 continue l'exploration des trajectoires candidates de la liste L (pour trouver des candidats dans la liste L avec une valeur de fonction de coût F inférieure). Lorsqu'une trajectoire volable est trouvée, ladite trajectoire est ajoutée à la liste de candidats L, avec une heuristique H égale à 0 et une fonction de coût F égale à la distance jusqu'à la fin de la trajectoire qui vient d'être trouvée. Le système ATG 101 détermine que la recherche de trajectoire volable est terminée lorsque la trajectoire candidate suivante de la liste L (au début de la liste L) a une heuristique H égale à 0.

Dans l'étape 1355, le système ATG 101 recherche une trajectoire volable tangentielle entre le troisième cercle sur lequel s'est arrêtée la trajectoire candidate et un autre dit troisième cercle. En d'autres termes, le système ATG 101 recherche un autre sommet à contourner qui pourrait rapprocher de la position de la destination T_POS, en respectant le profil de trajectoire verticale applicable (et préférentiellement le profil de vitesse applicable). Le sens de parcours du troisième cercle sur lequel s'est arrêtée la trajectoire candidate dépend de la direction d'arrivée de l'aéronef 100 sur ledit troisième cercle. Un filtrage peut être appliqué par le système ATG 101 de sorte à ne pas considérer tous les sommets de polygones représentatifs d'obstacles portés à la connaissance du système ATG 101 par les bases de données PDTDB 201, PDMDB 202 et PDWDB 204. Un exemple est schématiquement illustré sur la **Fig. 14B,** où est schématiquement illustrée une progression de recherche de trajectoire par contournement de sommets de polygones, en suivant le chemin suivant : parcours d'une partie du premier cercle 1401 centré à droite par rapport à la position A_POS, puis parcours d'une tangente entre ledit premier cercle 1401 et le troisième cercle 1402 autour du sommet de polygone V3, puis parcours d'une partie dudit troisième cercle 1402 autour du sommet de polygone V3, puis soit parcours d'une tangente entre ledit troisième cercle 1402 autour du sommet de polygone V3 et le troisième cercle 1403 autour du sommet V5, ou soit parcours d'une tangente entre ledit troisième cercle 1402 autour du sommet de polygone V3 et le troisième cercle 1403 autour du sommet de polygone V2. Il apparaît sur la Fig. 14B que, à partir de ce troisième cercle 1403 autour du sommet V5, la position T_POS de la destination peut être directement atteinte, tout en respectant la direction T_TRK à suivre à destination. Une trajectoire possible devrait donc être trouvée à la prochaine itération d'exploration de cette trajectoire.

A noter que lorsque le parcours du troisième cercle sur lequel s'est arrêtée la trajectoire candidate se fait par virage à gauche (resp. à droite), le système ATG 101 exclut toute trajectoire volable vers un autre dit troisième cercle qui impose un virage à droite (resp. à gauche). En effet, une telle trajectoire volable peut exister, mais n'est pas considérée comme étant intéressante. Il n'y a dans ce cas pas de trajectoire tangentielle volable qui respecte le sens de parcours du troisième cercle sur lequel s'est arrêtée la trajectoire candidate. De plus, des trajectoires alternatives plus courtes doivent certainement exister, et donc être présentes dans la liste L, en direction de ces sommets de polygones. Ainsi, sur la Fig. 14B, le système ATG 101 exclut les éventuelles trajectoires qui, depuis le troisième cercle 1402 qui entoure le sommet de polygone V3, mènent aux sommets V7 et V9 par exemple.

Dans une étape 1356, le système ATG 101 vérifie si une ou plusieurs trajectoires volables ont été trouvées à l'étape 1355. Si tel est le cas, une étape 1357 est effectuée ; sinon, une étape 1358 est effectuée.

Dans l'étape 1357, le système ATG 101 ajoute chaque trajectoire trouvée à l'étape 1355 dans la liste L. Puis, l'étape 1358 est effectuée.

Dans un mode de réalisation particulier, le système ATG 101 ajoute une dite trajectoire dans la liste L uniquement si la liste L ne contient pas déjà une trajectoire, plus courte, permettant d'atteindre le troisième cercle autour du sommet de polygone auquel s'arrête ladite trajectoire. Et dans un mode de réalisation particulier, lorsque le système ATG 101 ajoute une dite trajectoire dans la liste L, le système ATG 101 retire de la liste L toute trajectoire qui s'arrête au troisième cercle du même sommet de polygone mais qui est plus longue que ladite trajectoire ajoutée.

Dans l'étape 1358, le système ATG 101 continue d'explorer au moins une trajectoire candidate de la liste L, et effectue alors une nouvelle itération de l'algorithme de la Fig. 13B.

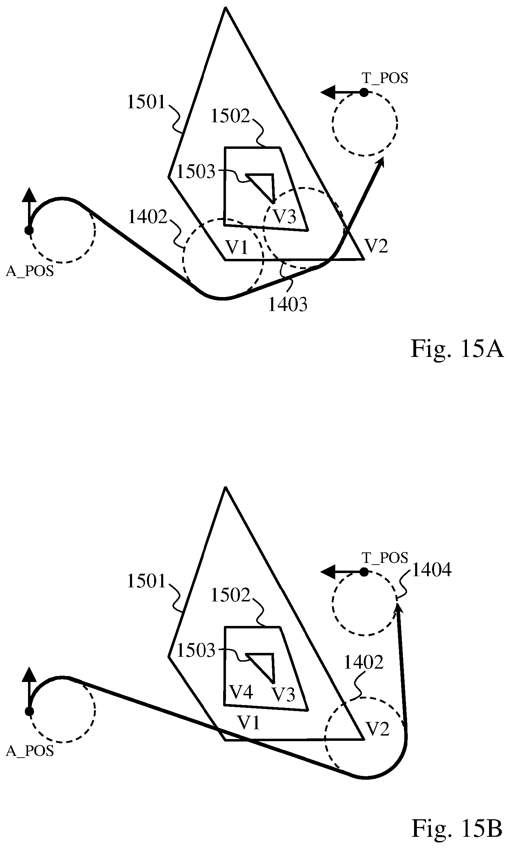

Comme déjà mentionné, le système ATG 101 respecte le profil de trajectoire verticale lors de la détermination de trajectoire. Il convient donc de noter que, si le profil de trajectoire verticale implique que l'aéronef 100 prend de l'altitude, cela signifie que, au fil du temps, le calcul de trajectoire est libéré des contraintes de certaines couches et donc de polygones (d'obstacles). Cette situation est schématiquement illustrée sur la **Fig. 15A.** Une trajectoire depuis la position A_POS de l'aéronef 100 jusqu'à la position de la destination T_POS est investiguée, en contournant un obstacle défini par des polygones sur 3 couches successives : une première couche représentant un intervalle d'altitude inférieur à une deuxième couche, elle-même représentant un intervalle d'altitude inférieur à une troisième couche. Le polygone 1501 représentant l'obstacle dans la première couche inclut le polygone 1502 représentant l'obstacle dans la deuxième couche, lui-même incluant le polygone 1503 représentant l'obstacle dans la troisième couche. Au regard du profil de trajectoire verticale, le premier sommet de polygone en séquence que l'aéronef 100 contourne est le sommet V1 de la première couche. Après le contournement de ce sommet de polygone V1, le profil de trajectoire verticale implique une montée en altitude de l'aéronef 100, au-dessus de la première couche (en tenant compte de la marge verticale VM). Le contournement de sommet de polygone suivant en séquence concerne ainsi le sommet V3 de la deuxième couche et non le sommet V2 de la première couche. A l'inverse, si le profil de trajectoire verticale implique que l'aéronef 100 perd de l'altitude, cela signifie que, au fil du temps, le calcul de trajectoire est renforcé des contraintes de certaines couches et donc de polygones (d'obstacles). Cette situation est schématiquement illustrée sur la **Fig. 15B.** Dans ce cas, le premier sommet de polygone en séquence que l'aéronef 100 contourne est le sommet V2 de la première couche. Au départ de la position courante A_POS, l'altitude de l'aéronef 100 est supérieure à la première couche (en tenant compte de la marge verticale VM). Le sommet V1 n'a alors pas besoin d'être contourné. L'aéronef 100 descendant en altitude, les contraintes d'obstacles de la première couche sont ajoutées. Sur la Fig. 15B, la trajectoire tangentielle avec le troisième cercle du sommet V2 depuis le premier cercle centré à droite de la position A_POS selon la direction A_DIR est éloignée du sommet V4 de la deuxième couche d'une distance supérieure à la marge latérale LM. Le sommet V2 doit ainsi être contourné (et non le sommet V3 de la deuxième couche).

Pour un exemple d'application où les rayons des deuxième et troisième cercles restent constants, l'expansion de trajectoire entre un sommet $V_A$ et un sommet $V_B$ (ou la destination) reste la même entre différents appels à l'algorithme tant que le rayon de virage utilisé est le même et que l'altitude n'est pas modifiée par le profil de trajectoire verticale, l'expansion de trajectoire entre le sommet $V_A$ et le sommet $V_B$ peut être calculée et stockée en mémoire et être réutilisée dans un calcul ultérieur. Cela permet de régulièrement interroger le système ATG 101 pendant le vol pour s'assurer qu'une trajectoire sûre, volable, est toujours disponible pour amener l'aéronef 100 à destination. Ainsi, une matrice peut stocker pour chaque paire de sommets (ou sommet et destination) des informations sur la possibilité ou non d'établir une trajectoire volable entre eux selon l'altitude considérée, et le cas échéant fournir un pointeur vers une zone mémoire qui décrit la trajectoire volable applicable entre deux sommets. Cela permet de réduire les temps de calcul de trajectoire lors de ces appels ultérieurs au système ATG 101.

Dans un mode de réalisation particulier, si le système ATG 101 détecte, lorsque le profil de trajectoire verticale impose une descente, que l'aéronef 100 est dans le polygone d'un obstacle (par exemple une plaine haute à 10000 pieds), il est souhaitable qu'il sorte le plus vite possible de l'obstacle en question. Pour cela, le système ATG 101 crée des sommets virtuels.

Comme déjà mentionné, des opérations de filtrage peuvent être effectuées pour réduire encore le temps de calcul de trajectoire volable pour rejoindre la destination. Ces opérations de filtrage sont réalisées en temps réel, lors de la recherche de trajectoire. Ces opérations de filtrage permettent de ne considérer que les trajectoires potentiellement intéressantes, et de filtrer les trajectoires à priori non intéressantes. Les modes de réalisation particuliers de filtrage présentés ci-dessous peuvent être combinés.

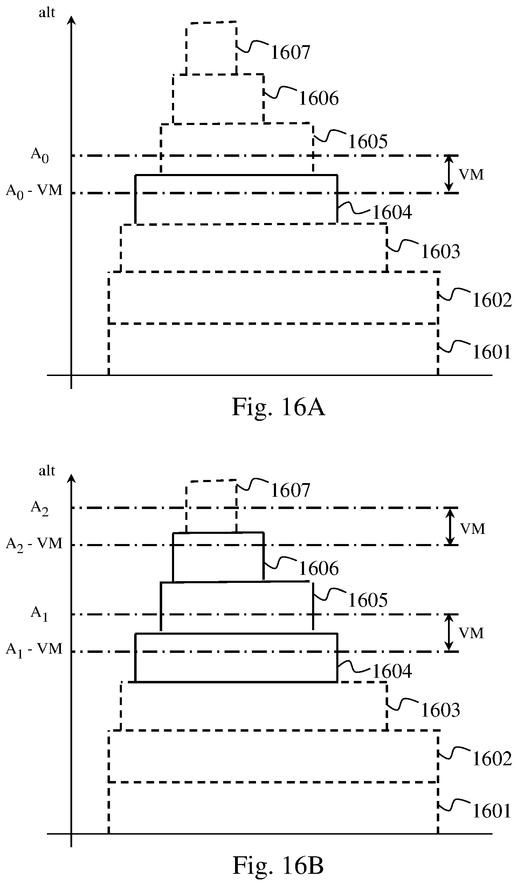

Dans un premier mode de réalisation de filtrage, le système ATG 101 effectue une recherche de trajectoire par contournement de sommets uniquement en considérant les sommets de polygones pertinents au regard du profil de trajectoire verticale. Ainsi, dans le cas où la recherche de trajectoire doit être effectuée à altitude constante, seule la plus basse couche parmi celles qui ne sont pas inférieures à l'altitude de l'aéronef 100 moins la marge verticale VM est prise en compte, comme montré sur la Fig. 16A. Le système ATG 101 exclut alors de ladite recherche de trajectoire les sommets de polygones qui ne sont pas dans ladite plus basse couche. La **Fig. 16A** illustre schématiquement, en vue en coupe, un ensemble de polygones qui représentent, par couche d'altitude, un obstacle de relief de terrain. L'obstacle est représenté sur 7 couches 1601 à 1607. En supposant que l'altitude considérée de l'aéronef 100 est égale à $A_0$, alors seuls les sommets de polygones de la couche la plus basse 1604 parmi celles 1604, 1605, 1606, 1607 qui ne sont pas inférieures à l'altitude de l'aéronef 100 moins la marge verticale VM sont pris en compte. Les polygones des couches inférieures 1601, 1602, 1603 ne sont pas considérés car ils sont en dessous de l'altitude $A_0$ moins la marge verticale VM. Les polygones des couches supérieures 1605, 1606, 1607 étant inclus dans le polygone de la couche 1604, leurs sommets ne sont pas non plus considérés. En effet, ces polygones des couches supérieures 1605, 1606, 1607 sont au-dessus de l'altitude $A_0$ moins la marge verticale VM et doivent donc être évités, mais sont inclus dans le polygone de la couche 1604. En évitant le polygone de la couche 1604, les polygones des couches supérieures 1605, 1606, 1607 sont donc également évités. En cas de montée ou de descente, le même raisonnement est appliqué pour ne garder que les couches qui sont pertinentes au regard de l'intervalle d'altitude considéré dans le profil de trajectoire verticale, comme montré sur la **Fig. 16B**. L'intervalle d'altitude considéré est défini par une borne inférieure égale à l'altitude minimum $A_1$ de l'aéronef 100 à considérer moins la marge verticale VM, et par une borne supérieure égale à l'altitude maximum $A_2$ de l'aéronef 100 à considérer moins la marge verticale VM.

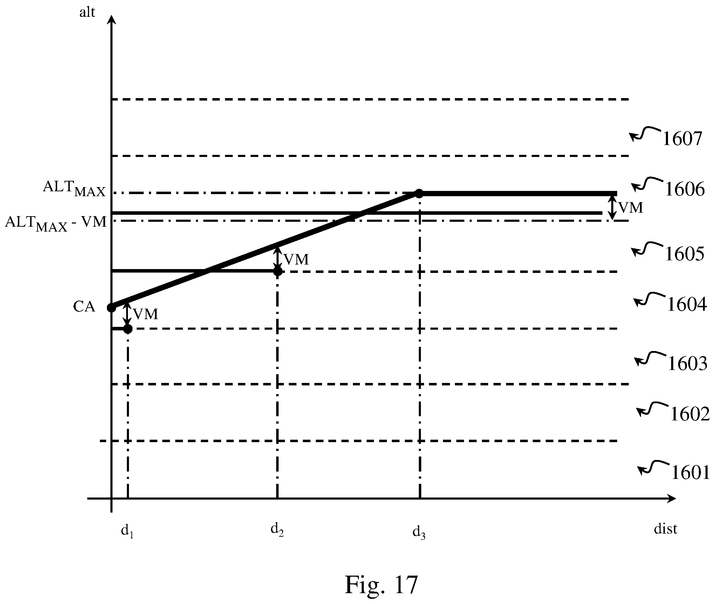

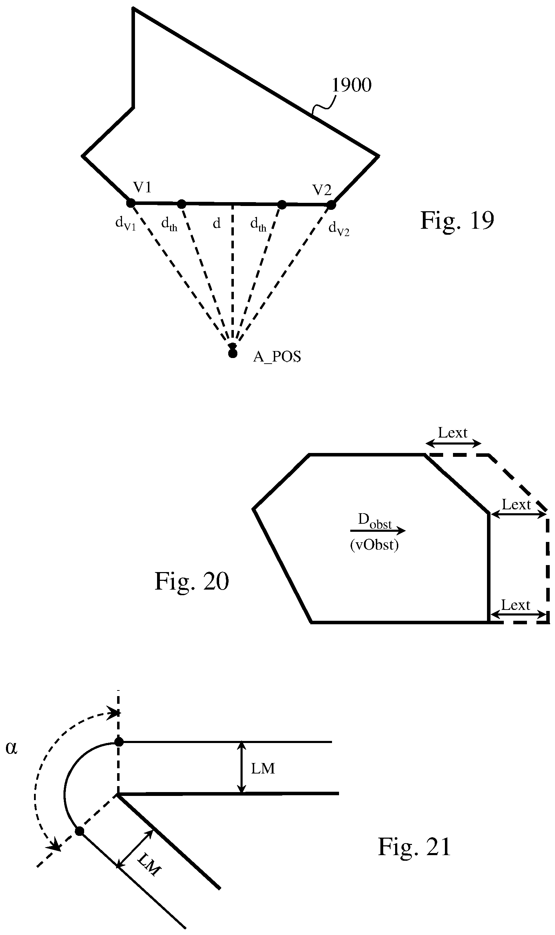

Dans un deuxième mode de réalisation de filtrage, le système ATG 101 tient plus finement compte du profil de trajectoire verticale pour effectuer un filtrage par distance relativement aux arêtes de polygones. En effet, une arête de polygone n'a pas besoin d'être prise en compte dans une expansion de trajectoire considérée si cette arête de polygone est suffisamment éloignée de l'aéronef 100 pour que, même si ce dernier va droit vers cette arête, le profil de trajectoire verticale est tel que l'altitude de l'aéronef aura suffisamment augmenté au moment de l'arrivée sur ladite arête pour que le relief correspondant ne soit plus une contrainte pour la trajectoire effective de l'aéronef 100. Cet aspect est montré sur la **Fig. 17,** qui illustre schématiquement une sélection de polygones, par couches d'altitude, en fonction du profil de trajectoire verticale de la Fig. 10C. Ainsi, selon le profil de trajectoire verticale, l'altitude de l'aéronef 100 devient supérieure à la borne supérieure de la couche 1603 plus la marge verticale VM après avoir parcouru une distance d1, l'altitude de l'aéronef 100 devient supérieure à la borne supérieure de la couche 1604 plus la marge verticale VM après avoir parcouru une distance d2 et l'altitude de l'aéronef 100 se stabilise à l'altitude maximale $ALT_{max}$ après avoir parcouru une distance d3, la borne supérieure de la couche 1605 étant supérieure à l'altitude maximale $ALT_{max}$ moins la marge verticale VM. Pour une montée de l'aéronef 100, la couche 1603 est pertinente jusqu'à la distance d1 moins la marge latérale LM, la couche 1604 est pertinente jusqu'à la distance d2 moins la marge latérale LM, et la couche 1605 est pertinente jusqu'à la distance d3 moins la marge latérale LM et au-delà. Pour une descente de l'aéronef, la couche 1603 est pertinente jusqu'à la distance d1 plus la marge latérale LM, la couche 1604 est pertinente jusqu'à la distance d2 plus la marge latérale LM, et la couche 1605 est pertinente jusqu'à la distance d3 plus la marge latérale LM et au-delà. Le système ATG 101 calcule la distance de chaque arête de polygone comme si un segment de ligne droite était suivi, ce qui sous-estime la distance réelle à l'obstacle car l'aéronef 100 ne suit pas nécessairement cette direction et un ou plusieurs virages sont généralement nécessaires pour permettre à l'aéronef 100 d'y parvenir en réalité. Ensuite, à partir du profil de trajectoire verticale correspondant à une montée, le système ATG 101 détermine si, après avoir parcouru la distance à l'arête diminuée de la marge latérale LM, l'altitude de l'aéronef 100 est supérieure à celle de l'arête considérée plus la marge verticale VM. Si tel est le cas, l'arête n'a pas besoin d'être prise en compte dans le calcul de trajectoire. De façon similaire, à partir du profil de trajectoire verticale correspondant à une descente, le système ATG 101 détermine si, après avoir parcouru la distance à l'arête augmentée de la marge latérale LM, l'altitude de l'aéronef 100 est inférieure à celle de la couche d'altitude en dessous de ladite arête considérée plus la marge verticale LM. Si tel est le cas, l'arête n'a pas besoin d'être prise en compte dans le calcul de trajectoire. L'utilisation d'une sous-estimation de la distance à chaque arête garantit qu'aucune arête pertinente n'est filtrée. Il est important ici de déterminer la distance à l'arête, pas la distance à ses sommets. Utiliser la distance aux sommets pourrait entraîner le filtrage d'une arête qui devrait être conservée. En effet, la distance $d_{v1}$ (resp. $d_{v2}$) entre la position A_POS de l'aéronef 100 (indépendamment de la direction de vol A_DIR) et un sommet V1 (resp. V2) d'un polygone 1900 est plus grande que celle entre la position A_POS de l'aéronef 100 et l'arête reliant les sommets V1 et V2, comme illustré schématiquement sur la **Fig. 19,** où $d_{th}$ représente la distance en dessous de laquelle l'altitude de l'aéronef selon le profil de trajectoire verticale est inférieure à celle de l'arête en question augmentée de la marge verticale VM.

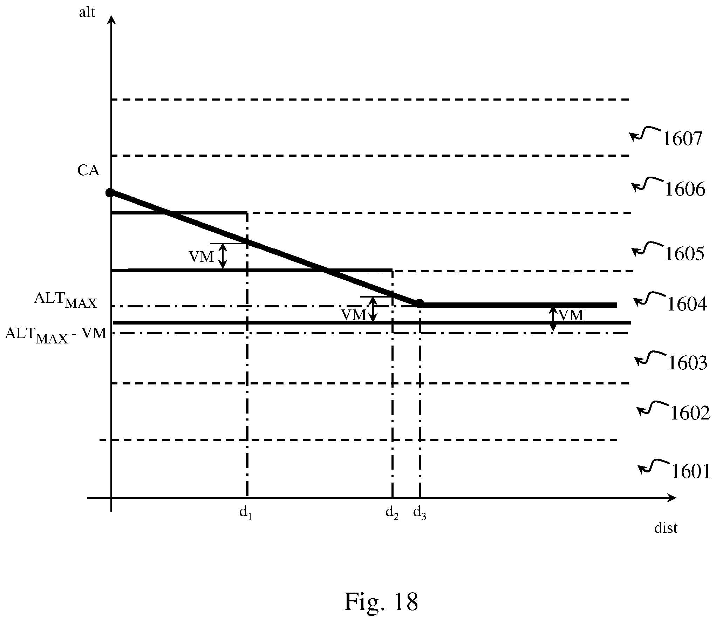

Un principe identique peut être appliqué avec un profil de trajectoire verticale qui impose une descente de l'aéronef 100. Cet aspect est montré sur la **Fig. 18,** qui illustre schématiquement une sélection de polygones, par couches d'altitude, en fonction du profil de trajectoire verticale de la Fig. 10B. Ainsi, selon le profil de trajectoire verticale, l'altitude de l'aéronef 100 arrête d'être supérieure à la borne supérieure de la couche 1604 plus la marge verticale VM après avoir parcouru une distance d1, l'altitude de l'aéronef 100 arrête d'être supérieure à la borne supérieure de la couche 1603 plus la marge verticale VM après avoir parcouru une distance d2 et l'altitude de l'aéronef 100 se stabilise à l'altitude maximale $ALT_{max}$ après avoir parcouru une distance d3, la borne supérieure de la couche 1603 étant supérieure à l'altitude maximale $ALT_{max}$ moins la marge verticale VM. Alors, la couche 1605 est pertinente jusqu'à la distance d1 augmentée de la marge latérale LM, la couche 1604 est pertinente jusqu'à la distance d2 augmentée de la marge latérale LM, et la couche 1603 est pertinente jusqu'à la distance d3 augmentée de la marge latérale LM et au-delà. Dans le cas d'une descente de l'aéronef 100, si une couche inférieure devient pertinente et doit être évitée (les arêtes du polygone ne sont plus dégagées), une couche supérieure à cette couche, qui est incluse dans cette couche inférieure, est automatiquement évitée. Un tel filtrage permet ainsi de minimiser des calculs à effectuer, puisqu'il est déterminé en amont que la couche inférieure devient pertinente.

Dans un troisième mode de réalisation de filtrage, le système ATG 101 effectue un filtrage relatif à la distance G dans l'expression de la fonction de coût F. Dès lors qu'un premier chemin sûr vers un sommet de polygone est trouvé, un descriptif de ce chemin est sauvegardé et sert de référence pour filtrer la liste des trajectoires candidates de la liste L. Ce filtrage empêche la génération d'une trajectoire vers ce même sommet qui serait plus longue, même si cette trajectoire est volable. Ainsi, une fois que le système ATG 101 a trouvé un chemin P1 sûr vers un sommet V, sa valeur de distance G (notée Gv) est sauvegardée. Ensuite, chaque fois qu'une autre trajectoire candidate P2 envisage également de rejoindre le sommet V (pour le contourner) avec une valeur actuelle de distance G (notée Gp), la condition suivante est testée :

$$Gp + d_{min} > Gv$$

où $d_{min}$ est une limite inférieure de longueur du chemin entre la position à laquelle la trajectoire considérée s'est arrêtée et le sommet de polygone considéré. Une telle limite inférieure correspond à la distance euclidienne entre la position à laquelle la trajectoire considérée s'est arrêtée et le sommet de polygone considéré (correspondant à un cas où la trajectoire de l'aéronef est déjà alignée avec la tangente avec le troisième cercle de ce sommet de polygone et qu'il n'est donc pas nécessaire d'effectuer un virage pour y parvenir). Si la condition est remplie, il n'est pas créé d'expansion d'une trajectoire, et la trajectoire candidate déjà existante est conservée puisqu'il n'existe pas de meilleur chemin pour y arriver. Dans ce cas, la liste L reste inchangée. Sinon, un meilleur chemin est construit, et le système ATG 101 met la liste L à jour en conséquence, c'est-à-dire que le chemin P2 remplace le chemin P1 pour atteindre le troisième cercle du sommet de polygone V et la valeur de distance G est aussi mise à jour.

Dans un quatrième mode de réalisation de filtrage, le système ATG 101 effectue un filtrage relatif à la fonction de coût F. Si une trajectoire volable depuis la position A_POS jusqu'à la position T_POS qui respecte le profil de trajectoire verticale et les directions A_DIR et T_TRK existe dans la liste L, le système ATG 101 peut abandonner l'expansion d'une trajectoire vers le troisième cercle autour d'un sommet de polygone si le système ATG 101 détermine a priori que, quelle que soit l'extension à partir du contournement de ce sommet, une solution plus courte que celle déjà trouvée n'est pas possible. Cette situation intervient lorsque la somme de la valeur G actuelle de la trajectoire candidate considérée plus la distance jusqu'au centre du troisième cercle du sommet en question plus la distance du centre de ce troisième cercle au centre d'un dit deuxième cercle (relatif à la destination) est plus grande que la valeur de fonction de coût F de la solution déjà existante. Le système ATG 101 peut donc calculer cette somme et la comparer avec la fonction de coût F de la solution déjà existante, et décider d'abandonner ou poursuivre l'expansion de la trajectoire candidate considérée vers ce sommet de polygone (pour le contourner).

Dans un cinquième mode de réalisation de filtrage, le système ATG 101 effectue un filtrage relatif aux sommets extrêmes de polygones. Du point de vue d'une position et d'une direction considérées de l'aéronef 100, seuls les coins les plus à droite et à gauche d'un obstacle sont à considérer pour effectuer un contournement de l'obstacle. Les autres sommets du polygone peuvent être exclus de la recherche d'expansion de trajectoire. Il convient de noter que si le profil de trajectoire verticale fait grimper l'aéronef 100 et qu'une partie de l'obstacle considéré est franchie (avec la marge verticale VM) lors de la montée, le système ATG 101 considère uniquement les sommets extrêmes des arêtes qui ne sont pas dégagées (« cleared » en anglais) par le deuxième mode de réalisation de filtrage, pas les sommets extrêmes du polygone complet. Il convient également de noter que les sommets extrêmes sont calculés en tenant compte de la trajectoire de l'aéronef 100 (et donc des virages que l'aéronef 100 doit effectuer) et de la marge latérale LM, et pas simplement de la ligne de vue depuis la position considérée de l'aéronef 100. Les deux sommets extrêmes sont déterminés par le système ATG 101 en considérant uniquement l'aéronef 100 et le polygone considéré. Ensuite, si un autre obstacle se trouve sur le chemin, cela signifie simplement que cet autre obstacle doit d'abord être contourné, et les deux sommets extrêmes de cet autre obstacle doivent être considérés en premier lieu.

Dans un mode de réalisation particulier, le système ATG 101 tient compte d'un caractère dynamique des obstacles météorologiques dans le calcul de trajectoire. Ainsi, la position effective des polygones représentant ces obstacles météorologiques peut varier dans le temps. Pour adresser cet aspect, les polygones de la base de données PDWDB 204 sont associés à une vitesse de déplacement vObst et à une direction de déplacement $D_{obst}$, obtenues par analyse d'images radars et de comparaison avec des modèles météorologiques. Lorsque la direction de déplacement d'un sommet pointe vers l'intérieur du polygone, il n'y a pas de problème à arriver au troisième cercle autour de ce sommet plus tard que calculé initialement. En effet, dans un tel cas, l'obstacle est plus éloigné de l'aéronef 100 qu'initialement considéré et donc la trajectoire reste volable. Par contre, si la direction de déplacement du sommet pointe vers l'extérieur du polygone (par rapport au sommet en question), arriver au troisième cercle autour de ce sommet plus tard que calculé initialement risque d'entraîner une collision de l'aéronef 100 avec l'obstacle météorologique. En considérant des obstacles dynamiques, le calcul présenté précédemment reste valable tant qu'il est possible d'identifier le point à cibler : le point où l'aéronef 100 et le sommet ciblé de l'obstacle arrivent en même temps. Le calcul s'effectue sans considérer les virages avant que l'aéronef 100 n'atteigne le sommet, ni les virages en sortie du sommet du polygone lors des expansions suivantes. Le calcul s'effectue ainsi en considérant que l'aéronef 100 se déplace en ligne droite. Comme en réalité il y a typiquement un virage au début de l'expansion, une marge est introduite dans le cas où la direction de déplacement du sommet pointe vers l'extérieur du polygone. Pour adresser cette situation, lorsque le système ATG 101 note que la direction de déplacement du sommet pointe vers l'extérieur du polygone par rapport au sommet en question, le système ATG 101 ajuste la position dudit sommet en la déplaçant d'une distance Lext dans la direction de déplacement $D_{obst}$. La distance Lext est représentative d'un déplacement estimé de l'obstacle pendant le délai $\Delta t$ entre l'instant d'arrivée $T_0$ sur le sommet tel que calculé (en ligne droite) et l'instant réel maximal $t_{max}$ d'arrivée sur le sommet. Le délai $\Delta t$ est défini par :

$$\Delta t = \frac{d_{max} - d_e}{A\_VEL}$$

où $d_{max}$ représente la distance maximum de la portion de trajectoire considérée (le maximum de la distance réelle, c'est-à-dire en incluant les virages) et $d_e$ représente la distance euclidienne considérée en calculant l'instant d'arrivée $T_0$.

La formule ci-dessus entraîne que la distance Lext est calculée comme suit :

$$Lext = vObst * \Delta t = vObst * \frac{d_{max} - d_e}{A\_VEL}$$

Ainsi, le système ATG 101 calcule la distance Lext et étend les dimensions du polygone considéré en appliquant à chaque sommet un décalage égal à la distance Lext dans la direction $D_{obst}$ dès lors que ce décalage déplace ledit sommet vers l'extérieur du polygone (pas de déplacement vers l'intérieur du polygone), comme schématiquement illustré sur la **Fig. 20**. De plus, dans un mode de réalisation particulier, le système ATG 101 tient en outre compte du besoin de contourner le sommet en question pour poursuivre la trajectoire à la recherche de la destination. Ce contournement est au maximum caractérisé par un angle $\alpha$ tel que schématiquement illustré sur la **Fig. 21**. En tenant compte de la vitesse A_VEL de l'aéronef 100, le temps maximum de contournement du sommet $\Delta t_c$ est défini par :

$$\Delta t_c = \frac{\alpha * R}{A\_VEL}$$

où R est le rayon de virage que peut effectuer l'aéronef. Dans le cas où le rayon de virage R est supérieur à la marge latérale LM, le rayon de virage R est pris en compte dans le calcul. Le rayon de virage R est au minimum égal à la marge latérale LM.

La formule ci-dessus entraîne qu'une distance supplémentaire $Lext_c$ est calculée comme suit :

$$Lext_c = vObst * \Delta t_c = vObst * \frac{\alpha * R}{A\_VEL}$$

où l'angle $\alpha$ est exprimé en radians. L'angle $\alpha$ est l'angle maximum de virage au début des expansions suivantes qui peuvent être réalisées à partir du sommet du polygone en question.

Ainsi, le système ATG 101 calcule la distance $Lext_c$ et étend les dimensions du polygone considéré de la même manière que précédemment, en appliquant cette fois un décalage égal à la somme de la distance Lext et de la distance supplémentaire $Lext_c$ dans la direction $D_{obst}$ (et non simplement de la distance Lext).

Ainsi, le système ATG 101 est apte à rechercher une trajectoire sûre, bien qu'ayant à faire face à des obstacles mouvants.


**Revendications**

**1.** Procédé de génération de trajectoire pour amener un aéronef (100) en vol depuis une position courante de l'aéronef (A_POS) à une destination (DEST) ayant une position géoréférencée, le procédé étant implémenté par un système de génération automatique de trajectoire (101) sous forme de circuiterie électronique embarquée dans l'aéronef, le procédé comportant les étapes suivantes :

- obtenir des polygones (1501, 1502, 1503, 1900) représentatifs d'obstacles potentiellement rencontrés par l'aéronef depuis la position courante de l'aéronef jusqu'à la destination, chaque polygone étant associé avec une couche d'altitude (1601-1607) dans laquelle l'obstacle (800, 1400) est inclus dans ledit polygone ;
- définir deux premiers cercles (1401) tangentiels (1101) par rapport à une direction actuelle (A_DIR) de vol de l'aéronef, l'un étant centré à droite, l'autre étant centré à gauche, par rapport à la position courante de l'aéronef, le rayon des premiers cercles étant un rayon minimum de virage que peut effectuer l'aéronef au regard de son état opérationnel ;
- définir deux deuxièmes cercles tangentiels (1102) par rapport à une direction à suivre (T_TRK) à destination, l'un étant centré à droite, l'autre étant centré à gauche, par rapport à la position géoréférencée de la destination ;
- définir un troisième cercle (1402, 1403) autour de sommets (V1-V10) de dits polygones (1301), de rayon égal au maximum entre une marge latérale (LM) prédéterminée et un rayon de virage que peut effectuer l'aéronef au regard de sa vitesse à l'arrivée au sommet du polygone ;
- rechercher une trajectoire latérale volable entre la position courante de l'aéronef et la destination en contournant les polygones par les sommets en recherchant des trajectoires tangentielles entre lesdits cercles (906), en respectant un profil de trajectoire verticale (VPROF) préétabli, la direction actuelle de vol de l'aéronef et la direction à suivre à destination, ainsi que la marge latérale prédéterminée et une marge verticale (VM) prédéterminée avec les polygones,

et pour au moins une arête de polygone, le procédé comporte les étapes suivantes :

- calculer une distance (d) entre la position courante de l'aéronef et chaque arête de polygone ;
- lorsque le profil de trajectoire verticale correspond à une montée, déterminer en fonction du profil de trajectoire verticale si, après avoir parcouru la distance à l'arête diminuée de la marge latérale, l'altitude de l'aéronef est supérieure à celle de ladite arête plus la marge verticale, et si tel est le cas, exclure l'arête de la recherche de trajectoire latérale volable ; ou
- lorsque le profil de trajectoire verticale correspond à une descente, déterminer en fonction du profil de trajectoire verticale si, après avoir parcouru la distance à l'arête augmentée de la marge latérale, l'altitude de l'aéronef est inférieure à celle d'une couche d'altitude en dessous de ladite arête plus la marge verticale, et si tel est le cas, exclure l'arête de la recherche de trajectoire latérale volable.

**2.** Procédé selon la revendication 1, comportant en outre les étapes successives suivantes :

- dilater les polygones (402) de la marge latérale (LM) prédéterminée dans toutes les directions ;
- fusionner les polygones (403) qui se touchent ou se chevauchent par couche d'altitude (1601-1607) ;
- rétracter les polygones (404) de la marge latérale prédéterminée dans toutes les directions.

**3.** Procédé selon l'une des revendications 1 et 2, comportant en outre les étapes suivantes :

- rechercher une trajectoire volable tangentielle (1103) entre un dit premier cercle (1401) et un dit deuxième cercle, en respectant le profil de trajectoire verticale (VPROF) préétabli, la direction actuelle (A_DIR) de vol de l'aéronef (100) et la direction à suivre (T_TRK) à destination (DEST), ainsi que la marge latérale (LM) prédéterminée et une marge verticale (VM) prédéterminée avec les polygones (1501, 1502, 1503, 1900) ;

- rechercher la trajectoire volable (1106), depuis la position courante (A_POS) de l'aéronef vers la position de la destination, par contournement de sommets (V1-V10) de polygone lorsqu'aucune trajectoire volable tangentielle entre un dit premier cercle et un dit deuxième cercle n'a été trouvée.

4. Procédé selon l'une quelconque des revendications 1 à 3, comportant en outre les étapes suivantes :

- déterminer des trajectoires candidates par progression de cercle en cercle parmi lesdits cercles et stocker les trajectoires candidates dans une liste (1304, 1357) ;
- choisir dans la liste (L) une trajectoire candidate à poursuivre qui est la plus prometteuse au regard d'une fonction de coût F telle que :

$$F = G + H$$

où G est une distance parcourue jusqu'à la fin actuelle de la trajectoire candidate et H est une heuristique de recherche de chemin qui sous-estime la distance encore à parcourir jusqu'à la destination (DEST).

5. Procédé selon la revendication 4, comportant en outre les étapes suivantes :

- lorsque le système de génération automatique de trajectoire (101) a trouvé une première trajectoire candidate P1 sûre vers un sommet V de polygone (1501, 1502, 1503, 1900), sauvegarder sa valeur de distance G, notée Gv ;
- lorsque le système de génération automatique de trajectoire trouve une deuxième trajectoire candidate P2 qui envisage de rejoindre le sommet V pour le contourner avec une valeur actuelle de distance G, notée Gp, tester la condition suivante :

$$Gp + d_{min} > Gv$$

où $d_{min}$ est une limite inférieure de longueur du chemin entre la position à la laquelle la trajectoire considérée s'est arrêtée et le sommet V ;
- lorsque la condition est remplie, conserver la liste (L) inchangée, et sinon, remplacer la première trajectoire candidate P1 par la deuxième trajectoire candidate P2 dans la liste.

6. Procédé selon la revendication 4 ou 5, comportant en outre les étapes suivantes :

- lorsque le système de génération automatique de trajectoire (101) a trouvé une trajectoire candidate vers un sommet de polygone (1501, 1502, 1503, 1900), calculer la somme de la valeur G actuelle de la trajectoire candidate en question plus la distance jusqu'au troisième cercle (1402, 1403) du sommet en question plus la distance de ce troisième cercle à un dit deuxième cercle ;
- abandonner l'expansion de ladite trajectoire candidate vers ledit sommet de polygone si la somme calculée est plus grande que la valeur de fonction de coût F d'une trajectoire déjà trouvée pour amener l'aéronef (100) en vol depuis la position courante (A_POS) à la destination (DEST).

7. Procédé selon l'une quelconque des revendications 1 à 6, comportant l'étape suivante :

- garder uniquement les polygones (1501, 1502, 1503, 1900) des couches qui sont pertinentes au regard d'une altitude constante ou d'un intervalle d'altitude défini par le profil de trajectoire verticale (VPROF).

8. Procédé selon l'une quelconque des revendications 1 à 7, dans lequel seuls les coins les plus à droite et à gauche d'un obstacle (800, 1400) sont considérés pour effectuer un contournement de l'obstacle.

9. Procédé selon l'une quelconque des revendications 1 à 8, comportant en outre les étapes suivantes, pour au moins un polygone (1501, 1502, 1503, 1900) représentatif d'un obstacle météorologique se déplaçant à une vitesse vObst dans une direction $D_{obst}$ :

- calculer une distance Lext de la façon suivante :

$$Lext = vObst * \frac{d_{max} - d_e}{A\_VEL}$$

où $d_{max}$ représente la distance maximum jusqu'au troisième cercle (1402, 1403) centré sur un sommet (V1-V10) du polygone en question et $d_e$ représente une distance euclidienne considérée en calculant un instant d'arrivée $T_0$ sur ledit sommet et un instant réel maximal $t_{max}$ d'arrivée sur ledit sommet ;
- étendre les dimensions du polygone en question en appliquant à chaque sommet un décalage égal à la distance Lext dans la direction $D_{obst}$ dès lors que ce décalage déplace ledit sommet vers l'extérieur du polygone en question.

**10.** Procédé selon la revendication 9, comportant en outre les étapes suivantes :

- calculer une distance Lext$_c$ de la façon suivante :

$$Lext_c = vObst * \frac{\alpha * R}{A\_VEL}$$

où $\alpha$ est un angle, exprimé en radians, maximum de virage que peut effectuer l'aéronef (100) à partir du sommet (V1-V10) du polygone (1501, 1502, 1503, 1900) en question et R le rayon de virage que peut effectuer l'aéronef ;
- étendre les dimensions du polygone en appliquant un décalage égal à la somme de la distance Lext et de la distance supplémentaire Lext$_c$ dès lors que ce décalage déplace ledit sommet vers l'extérieur du polygone en question.

**11.** Système de génération automatique de trajectoire (101) pour amener un aéronef (100) en vol depuis une position courante (A_POS) de l'aéronef à une destination (DEST) ayant une position géoréférencée, ledit système comportant de la circuiterie électronique configurée pour implémenter les étapes suivantes :

- obtenir des polygones représentatifs d'obstacles potentiellement rencontrés par l'aéronef depuis la position courante de l'aéronef jusqu'à la destination, chaque polygone (1501, 1502, 1503, 1900) étant associé avec une couche d'altitude (1601-1607) dans laquelle l'obstacle (800, 1400) est inclus dans ledit polygone ;
- définir deux premiers cercles (1401) tangentiels par rapport à une direction actuelle (A_DIR) de vol de l'aéronef, l'un étant centré à droite, l'autre étant centré à gauche, par rapport à la position courante de l'aéronef, le rayon des premiers cercles étant un rayon minimum de virage que peut effectuer l'aéronef au regard de son état opérationnel ;
- définir deux deuxièmes cercles tangentiels par rapport à une direction à suivre (T_TRK) à destination, l'un étant centré à droite, l'autre étant centré à gauche, par rapport à la position géoréférencée de la destination ;
- définir un troisième cercle (1402, 1403) autour de sommets (V1-V10) de dits polygones, de rayon égal au maximum entre une marge latérale (LM) prédéterminée et un rayon de virage que peut effectuer l'aéronef au regard de sa vitesse à l'arrivée au sommet du polygone ;
- rechercher une trajectoire latérale volable entre la position courante de l'aéronef et la destination en contournant les polygones par les sommets en recherchant des trajectoires tangentielles entre lesdits cercles, en respectant un profil de trajectoire verticale (VPROF) préétabli, la direction actuelle de vol de l'aéronef et la direction à suivre à destination, ainsi que la marge latérale prédéterminée et une marge verticale (VM) prédéterminée avec les polygones ;

et pour au moins une arête de polygone, le système comporte de la circuiterie électronique configurée pour implémenter les étapes suivantes :

- calculer une distance (d) entre la position courante de l'aéronef et chaque arête de polygone ;
- lorsque le profil de trajectoire verticale correspond à une montée, déterminer en fonction du profil de trajectoire verticale si, après avoir parcouru la distance à l'arête diminuée de la marge latérale, l'altitude de l'aéronef est supérieure à celle de ladite arête plus la marge verticale, et si tel est le cas, exclure l'arête de la recherche de trajectoire latérale volable ; ou
- lorsque le profil de trajectoire verticale correspond à une descente, déterminer en fonction du profil de trajectoire verticale si, après avoir parcouru la distance à l'arête augmentée de la marge latérale, l'altitude de l'aéronef est inférieure à celle d'une couche d'altitude en dessous de ladite arête plus la marge verticale, et si tel est le cas, exclure l'arête de la recherche de trajectoire latérale volable.

**Patentansprüche**

**1.** Verfahren zur Erzeugung einer Flugbahn, um ein Flugzeug (100) im Flug von einer aktuellen Position des Flugzeugs (A_POS) zu einem Ziel (DEST) mit einer georeferenzierten Position zu bringen, wobei das Verfahren durch ein System zur automatischen Erzeugung einer Flugbahn (101) in Form einer elektronischen Schaltungsanordnung an Bord des Flugzeug implementiert wird, wobei das Verfahren die folgenden Schritte umfasst:

- Erhalten von Polygonen (1501, 1502, 1503, 1900), die für Hindernisse repräsentativ sind, die potenziell vom Flugzeug ab der aktuellen Position des Flugzeugs bis zum Ziel angetroffen werden, wobei jedes Polygon einer Höhenschicht (1601-1607) zugeordnet ist, in der das Hindernis (800, 1400) in dem Polygon beinhaltet ist;
- Definieren zweier erster tangentialer Kreise (1401) (1101) bezüglich einer aktuellen Flugrichtung (A_DIR) des Flugzeugs, wobei der eine bezüglich der aktuellen Flugrichtung des Flugzeugs rechts zentriert ist, der andere links zentriert ist, wobei der Radius der ersten Kreise ein minimaler Kurvenradius ist, den das Flugzeug in seinem Betriebzustand ausführen kann;
- Definieren zweier zweiter tangentialer Kreise (1102) bezüglich einer zu folgenden Richtung (T_TRK) zum Ziel, wobei der eine bezüglich der georeferenzierten Position des Ziels rechts zentriert ist, der andere links zentriert ist;
- Definieren eines dritten Kreises (1402, 1403) um Gipfel (V1-V10) der Polygone (1301) herum mit einem Radius gleich dem Maximum zwischen einem vorgegebenen lateralen Spielraum (LM) und einem Kurvenradius, den das Flugzeug bei seiner Geschwindigkeit bei Ankunft am Gipfel des Polygons ausführen kann;
- Suchen einer fliegbaren lateralen Flugbahn zwischen der aktuellen Position des Flugzeugs und dem Ziel unter Umfliegen der Polygone mit den Gipfeln durch Suchen tangentialer Flugbahnen zwischen den Kreisen (906) unter Beachtung eines zuvor erstellten vertikalen Flugbahnprofils (VPROF), der aktuellen Flugrichtung des Flugzeugs und der zu folgenden Richtung zum Ziel sowie des vorgegebenen lateralen Spielraums und eines mit den Polygonen vorgegebenen vertikalen Spielraums(VM),

und für mindestens einen Grat eines Polygons umfasst das Verfahren die folgenden Schritte:

- Berechnen eines Abstands (d) zwischen der aktuellen Position des Flugzeugs und jedem Grat eines Polygons;
- wenn das vertikale Flugbahnprofil einem Anstieg entspricht, Bestimmen entsprechend dem vertikalen Flugbahnprofil, ob nach Zurücklegen des Abstands bis zum Grat abzüglich des lateralen Spielraums die Höhe des Flugzeugs höher ist als diejenige des Grats plus dem vertikalen Spielraum, und wenn dies der Fall ist, Ausschließen des Grats aus der Suche der fliegbaren lateralen Flugbahn; oder
- wenn das Profil der vertikalen Flugbahn einem Abstieg entspricht, Bestimmen entsprechend dem vertikalen Flugbahnprofil, ob nach Zurücklegen des Abstands bis zum Grat zuzüglich des lateralen Spielraums die Höhe des Flugzeugs niedriger ist als diejenige einer Höhenschicht unterhalb des Grats plus dem vertikalen Spielraum, und wenn dies der Fall ist, Ausschließen des Grats aus der Suche einer fliegbaren lateralen Flugbahn.

**2.** Verfahren nach Anspruch 1, umfassend ferner die folgenden aufeinanderfolgenden Schritte:

- Vergrößern der Polygone (402) des vorgegebenen lateralen Spielraums (LM) in alle Richtungen;
- Fusionieren der Polygone (403), die sich berühren oder überlappen, pro Höhenschicht (1601-1607);
- Verkleinern der Polygone (404) des vorgegebenen lateralen Spielraums in alle Richtungen.

**3.** Verfahren nach Anspruch 1 und 2, ferner umfassend die Schritte:

- Suchen einer fliegbaren tangentialen Flugbahn (1103) zwischen einem ersten Kreis (1401) und einem zweiten Kreis unter Beachtung des zuvor erstellten vertikalen Flugbahnprofils (VPROF), der aktuellen Flugrichtung (A_DIR) des Flugzeugs (100) und der zu folgenden Richtung (T_TRK) zum Ziel (DEST) sowie des vorgegebenen lateralen Spielraums (LM) und eines mit den Polygonen (1501, 1502, 1503, 1900) vorgegebenen vertikalen Spielraums (VM);
- Suchen der fliegbaren Flugbahn (1106) ab der aktuellen Position (A_POS) des Flugzeugs zur Zielposition unter Umfliegen von Gipfeln (V1-V10) eines Polygons, wenn keine fliegbare tangentiale Flugbahn zwischen dem ersten Kreis und einem zweiten Kreis gefunden wurde.

**4.** Verfahren nach Anspruch 1 und 3, ferner umfassend die Schritte:

- Bestimmen der Kandidatenflugbahnen durch Fortschreiten von Kreis zu Kreis unter den Kreisen und Speichern der Kandidatenflugbahenen in einer Liste (1304, 1357);
- Auswählen einer zu folgenden Kandidatenflugbahn, die die aussichtsreichste ist, aus einer Liste (L) im Hinblick auf eine Kostenfunktion F wie:

$$F = G + H$$

wobei G ein Abstand ist, der bis zum aktuellen Ende der Kandidatenflugbahn zurückgelegt wird, und H eine Heuristik der Wegsuche ist, die den Abstand, der bis zum Ziel (DEST) noch zurückzulegen ist, unterschätzt.

**5.** Verfahren nach Anspruch 4, ferner umfassend die folgenden Schritte:

- wenn das System zur automatischen Erzeugung einer Flugbahn (101) eine erste sichere Kandidatenflugbahn P1 zu einem Gipfel V eines Polygons (1501, 1502, 1503, 1900) gefunden hat, Speichern ihres Abstandswertes G, als Gv bezeichnet;
- wenn das System zur automatischen Erzeugung einer Flugbahn eine zweite sichere Kandidatenflugbahn P2 findet, bei der das Erreichen des Gipfels V in Betracht gezogen wird, um ihn mit einem aktuellen Abstandswert G, als Gp bezeichnet, zu umfliegen, Prüfen der folgenden Bedingung:

$$Gp + d_{min} > Gv$$

wobei $d_{min}$ eine Untergrenze der Weglänge zwischen der Position, an der die erwogene Flugbahn beendet ist, und dem Gipfel V ist;
- wenn die Bedingung erfüllt ist, Bewahren der unveränderten Liste (L), und wenn nicht, Ersetzen der ersten Kandidatenflugbahn P1 durch die zweite Kandidatenflugbahn P2 auf der Liste.

6. Verfahren nach Anspruch 4 oder 5, ferner umfassend die folgenden Schritte:

   - wenn das System zur automatischen Erzeugung einer Flugbahn (101) eine Kandidatenflugbahn zu einem Gipfel eines Polygons (1501, 1502, 1503, 1900) gefunden hat, Berechnen der Summe des aktuellen Wertes G der betreffenden Kandidatenflugbahn plus dem Abstand bis zum dritten Kreis (1402, 1403) des betreffenden Gipfels plus dem Abstand dieses dritten Kreises zu einem zweiten Kreis;
   - Aufgeben der Verlängerung der Kandidatenflugbahn zum Gipfel des Polygons, wenn die berechnete Summe größer ist als der Wert der Kostenfunktion F einer bereits gefundenen Flugbahn, um das Flugzeug (100) im Flug von der aktuellen Position (A_POS) zum Ziel (DEST) zu bringen.

7. Verfahren nach einem der Ansprüche 1 bis 6, umfassend den folgenden Schritt:

   - Behalten nur der Polygone (1501, 1502, 1503, 1900) der Schichten, die im Hinblick auf eine konstante Höhe oder ein Höhenintervall, das durch das vertikale Flugbahnprofil (VPROF) definiert ist, relevant sind.

8. Verfahren nach einem der Ansprüche 1 bis 7, wobei nur die Orte am weitesten rechts und links von einem Hindernis (800, 1400) betrachtet werden, um ein Umfliegen des Hindernisses durchzuführen.

9. Verfahren nach einem der Ansprüche 1 bis 8, ferner umfassend die folgenden Schritte für mindestens ein Polygon (1501, 1502, 1503, 1900), das repräsentativ ist für ein meteorologisches Hindernis, das sich mit einer Geschwindigkeit vObst in einer Richtung $D_{obst}$ bewegt:

   - Berechnen eines Abstands Lext auf folgende Weise:

$$Lext = vObst * \frac{d_{max} - d_e}{A\_VEL}$$

   wobei $d_{max}$ den maximalen Abstand zum dritten Kreis (1402, 1403) repräsentiert, der auf einem Gipfel (V1-V10) des betreffenden Polygons zentriert ist, und $d_e$ einen euklidischen Abstand repräsentiert, der berücksichtigt wird, indem ein Moment der Ankunft $T_0$ auf dem Gipfel und ein maximaler realer Moment der Ankunft $t_{max}$ auf dem Gipfel berechnet wird;
   - Erweitern der Dimensionen des betreffenden Polygons, indem auf jeden Gipfel eine Verschiebung angewendet wird, die gleich dem Abstand Lext in der Richtung $D_{obst}$ ist, sobald diese Verschiebung den Gipfel außerhalb des betreffenden Polygons verschiebt.

10. Verfahren nach Anspruch 9, ferner umfassend die folgenden Schritte:

   - Berechnen eines Abstands $Lext_c$ auf folgende Weise:

$$Lext_c = vObst * \frac{\alpha * R}{A\_VEL}$$

   wobei $\alpha$ ein in Bogenmaß ausgedrückter maximaler Kurvenwinkel ist, den das Flugzeug (100) ab dem Gipfel (V1-V10) des betreffenden Polygons (1501, 1502, 1503, 1900) ausführen kann, und R der Kurvenradius ist, den das Flugzeug ausführen kann;
   - Erweitern der Dimensionen des Polygons, indem eine Verschiebung angewendet wird, die gleich der Summe des Abstands $Lext_c$ ist, sobald diese Verschiebung den Gipfel außerhalb des betreffenden Polygons verlegt.

11. System zur automatischen Erzeugung einer Flugbahn (101), um ein Flugzeug (100) im Flug von einer aktuellen Position (A_POS) des Flugzeugs zu einem Ziel (DEST) mit einer georeferenzierten Position zu bringen, wobei das System eine elektronische Schaltungsanordnung umfasst, die dazu ausgelegt ist, die folgenden Schritte zu implementieren:

   - Erhalten von Polygonen (1501, 1502, 1503, 1900), die für Hindernisse repräsentativ sind, die potenziell vom Flugzeug ab der aktuellen Position des Flugzeugs bis zum Ziel angetroffen werden, wobei jedes Polygon einer Höhenschicht (1601-1607) zugeordnet ist, in der das Hindernis (800, 1400) in dem Polygon beinhaltet ist;

- Definieren zweier erster tangentialer Kreise (1401) bezüglich einer aktuellen Flugrichtung (A_DIR) des Flugzeugs, wobei der eine bezüglich der aktuellen Flugrichtung des Flugzeugs rechts zentriert ist, der andere links zentriert ist, wobei der Radius der ersten Kreise ein minimaler Kurvenradius ist, den das Flugzeug in seinem Betriebszustand ausführen kann;

- Definieren zweier zweiter tangentialer Kreise bezüglich einer zu folgenden Richtung (T_TRK) zum Ziel, wobei der eine bezüglich der georeferenzierten Position des Ziels rechts zentriert ist, der andere links zentriert ist;

- Definieren eines dritten Kreises (1402, 1403) um Gipfel (V1-V10) der Polygone herum mit einem Radius gleich dem Maximum zwischen einem vorgegebenen lateralen Spielraum (LM) und einem Kurvenradius, den das Flugzeug bei seiner Geschwindigkeit bei Ankunft am Gipfel des Polygons ausführen kann;

- Suchen einer fliegbaren lateralen Flugbahn zwischen der aktuellen Position des Flugzeugs und dem Ziel unter Umfliegen der Polygone mit den Gipfeln durch Suchen tangentialer Flugbahnen zwischen den Kreisen unter Beachtung eines zuvor erstellten vertikalen Flugbahnprofils (VPROF), der aktuellen Flugrichtung des Flugzeugs und der zu folgenden Richtung zum Ziel sowie des vorgegebenen lateralen Spielraums und eines mit den Polygonen vorgegebenen vertikalen Spielraums (VM);

und für mindestens einen Grat eines Polygons umfasst das System eine elektronische Schaltungsanordnung, die dazu ausgelegt ist, die folgenden Schritte zu implementieren:

- Berechnen eines Abstands (d) zwischen der aktuellen Position des Flugzeugs und jedem Grat eines Polygons;

- wenn das vertikale Flugbahnprofil einem Anstieg entspricht, Bestimmen entsprechend dem vertikalen Flugbahnprofil, ob nach Zurücklegen des Abstands bis zum Grat abzüglich des lateralen Spielraums die Höhe des Flugzeugs höher ist als diejenige des Grats plus dem vertikalen Spielraum, und wenn dies der Fall ist, Ausschließen des Grats aus der Suche der fliegbaren lateralen Flugbahn; oder

- wenn das Profil der vertikalen Flugbahn einem Abstieg entspricht, Bestimmen entsprechend dem vertikalen Flugbahnprofil, ob nach Zurücklegen des Abstands bis zum Grat zuzüglich des lateralen Spielraums die Höhe des Flugzeugs niedriger ist als diejenige einer Höhenschicht unterhalb des Grats plus dem vertikalen Spielraum, und wenn dies der Fall ist, Ausschließen des Grats aus der Suche einer fliegbaren lateralen Flugbahn.

## Claims

1. Method for generating a trajectory to bring an aircraft (100) in flight from a current position of the aircraft (A_POS) to a destination (DEST) having a georeferenced position, the method being implemented by an automatic trajectory generation system (101) in the form of electronic circuitry embedded in the aircraft, the method comprising the following steps:

   - obtaining polygons (1501, 1502, 1503, 1900) representative of obstacles potentially encountered by the aircraft from the current position of the aircraft to the destination, each polygon being associated with an altitude layer (1601-1607) in which the obstacle (800, 1400) is included in said polygon;
   - defining two first circles (1401) that are tangential (1101) with respect to a current direction (A_DIR) of flight of the aircraft, one being centred on the right, the other being centred on the left, with respect to the current position of the aircraft, the radius of the first circles being a minimum turn radius that the aircraft can perform given its operational state;
   - defining two second circles that are tangential (1102) with respect to a direction to be followed (T_TRK) to destination, one being centred on the right, the other being centred on the left, with respect to the georeferenced position of the destination;
   - defining a third circle (1402, 1403) around vertices (V1-V10) of said polygons (1301), of radius equal to the maximum between a predetermined lateral margin (LM) and a turn radius that the aircraft can perform in light of its speed on arrival at the vertex of the polygon;
   - searching for a flyable lateral trajectory between the current position of the aircraft and the destination by bypassing the polygons by the vertices, by searching for tangential trajectories between said circles (906), by observing a pre-established vertical trajectory profile (VPROF), the current direction of flight of the aircraft and the direction to be followed to destination, as well as the predetermined lateral margin and a predetermined vertical margin (VM) with the polygons,

and for at least one polygon edge, the method comprises the following steps:

- calculating a distance (d) between the current position of the aircraft and each polygon edge;
- when the vertical trajectory profile corresponds to a climb, determining, as a function of the vertical trajectory profile, whether, after having travelled the distance to the edge minus the lateral margin, the altitude of the aircraft is greater than that of said edge plus the vertical margin, and, if such is the case, excluding the edge from the search for a flyable lateral trajectory; or
- when the vertical trajectory profile corresponds to a descent, determining, as a function of the vertical trajectory profile, whether, after having travelled the distance to the edge plus the lateral margin, the altitude of the aircraft is lower than that of an altitude layer below said edge plus the vertical margin, and, if such is the case, excluding the edge from the search for a flyable lateral trajectory.

2. Method according to Claim 1, further comprising the following successive steps:

- expanding the polygons (402) by the predetermined lateral margin (LM) in all the directions;
- merging the polygons (403) which touch or overlap by altitude layer (1601-1607);
- retracting the polygons (404) by the predetermined lateral margin in all the directions.

3. Method according to either of Claims 1 and 2, further comprising the following steps:

- searching for a tangential flyable trajectory (1103) between one said first circle (1401) and one said second circle, by observing the preestablished vertical trajectory profile (VPROF), the current direction (A_DIR) of flight of the aircraft (100) and the direction to be followed (T_TRK) to destination (DEST), as well as the predetermined lateral margin (LM) and a predetermined vertical margin (VM) with the polygons (1501, 1502, 1503, 1900);
- searching for the flyable trajectory (1106), from the current position (A_POS) of the aircraft to the position of the destination, by bypassing polygon vertices (V1-V10) when no tangential flyable trajectory between one said first circle and one said second circle has been found.

4. Method according to any one of Claims 1 to 3, further comprising the following steps:

- determining candidate trajectories by progression from circle to circle among said circles and storing the candidate trajectories in a list (1304, 1357);
- choosing from the list (L) a candidate trajectory to be continued which is the most promising in light of a cost function F such that:

$$F = G + H$$

in which G is a distance travelled to the current end of the candidate trajectory and H is a path search heuristic which underestimates the distance still to be travelled to the destination (DEST).

5. Method according to Claim 4, further comprising the following steps:

- when the automatic trajectory generation system (101) has found a first safe candidate trajectory P1 to a polygon (1501, 1502, 1503, 1900) vertex V, saving its distance value G, denoted Gv;
- when the automatic trajectory generation system finds a second candidate trajectory P2 which envisages meeting the vertex V to bypass it with a current distance value G, denoted Gp, testing the following condition:

$$Gp + d_{min} > Gv$$

in which $d_{min}$ is a lower limit of path length between the position at which the trajectory considered stops and the vertex V;
- when the condition is fulfilled, conserving the unchanged list (L), and otherwise, replacing the first candidate trajectory P1 with the second candidate trajectory P2 in the list.

6. Method according to Claim 4 or 5, further comprising the following steps:

- when the automatic trajectory generation system (101) has found a candidate trajectory to a polygon (1501, 1502, 1503, 1900) vertex, calculating the sum of the current value G of the candidate trajectory concerned plus the distance to the third circle (1402, 1403) from the vertex concerned plus the distance from this third circle to one said second circle;
- aborting the expansion of said candidate trajectory to said polygon vertex if the calculated sum is greater than the value of the cost function F of a trajectory already found to bring the aircraft (100) in flight from the current position (A_POS) to the destination (DEST).

7. Method according to any one of Claims 1 to 6, comprising the following step:

- keeping only the polygons (1501, 1502, 1503, 1900) of the layers which are relevant in light of a constant altitude or of an altitude interval defined by the vertical trajectory profile (VPROF).

8. Method according to any one of Claims 1 to 7, wherein only the corners furthest to the right and to the left of an obstacle (800, 1400) are considered to perform a bypassing of the obstacle.

9. Method according to any one of Claims 1 to 8, further comprising the following steps, for at least one polygon (1501, 1502, 1503, 1900) representative of a meteorological obstacle moving at a speed vObst in a direction $D_{obst}$:

   - calculating a distance Lext as follows:

$$Lext = vObst * \frac{d_{max} - d_e}{A\_VEL}$$

   in which $d_{max}$ represents the maximum distance to the third circle (1402, 1403) centred on a vertex (V1-V10) of the polygon concerned and $d_e$ represents a Euclidian distance considered by calculating a time of arrival $T_0$ on said vertex and a real maximum time $t_{max}$ of arrival on said vertex;
   - extending the dimensions of the polygon concerned by applying to each vertex a shift equal to the distance Lext in the direction $D_{obst}$ as soon as this shift displaces said vertex outward from the polygon concerned.

10. Method according to Claim 9, further comprising the following steps:

   - calculating a distance $Lext_c$ as follows:

$$Lext_c = vObst * \frac{\alpha * R}{A\_VEL}$$

   in which $\alpha$ is a maximum turn angle, expressed in radians, that the aircraft (100) can perform from the vertex (V1-V10) of the polygon (1501, 1502, 1503, 1900) concerned and R is the turn radius that the aircraft can perform;
   - extending the dimensions of the polygon by applying a shift equal to the sum of the distance Lext and of the additional distance $Lext_c$ as soon as this shift displaces said vertex outward from the polygon concerned.

11. Automatic trajectory generation system (101) for bringing an aircraft (100) in flight from a current position (A_POS) of the aircraft to a destination (DEST) having a georeferenced position, said system comprising electronic circuitry configured to implement the following steps:

   - obtaining polygons representative of obstacles potentially encountered by the aircraft from the current position of the aircraft to the destination, each polygon (1501, 1502, 1503, 1900) being associated with an altitude layer (1601-1607) in which the obstacle (800, 1400) is included in said polygon;
   - defining two first circles (1401) that are tangential with respect to a current direction (A_DIR) of flight of the aircraft, one being centred on the right, the other being centred on the left, with respect to the current position of the aircraft, the radius of the first circles being a minimum turn radius that the aircraft can perform given its operational state;
   - defining two second circles that are tangential with respect to a direction to be followed (T_TRK) to destination, one being centred on the right, the other being centred on the left, with respect to the georeferenced position of the destination;
   - defining a third circle (1402, 1403) around vertices (V1-V10) of said polygons, of radius equal to the maximum between a predetermined lateral margin (LM) and a turn radius that the aircraft can perform in light of its speed on arrival at the vertex of the polygon;
   - searching for a flyable lateral trajectory between the current position of the aircraft and the destination by bypassing the polygons by the vertices, by searching for tangential trajectories between said circles, by observing a pre-established vertical trajectory profile (VPROF), the current direction of flight of the aircraft and the direction to be followed to destination, as well as the predetermined lateral margin and a predetermined vertical margin (VM) with the polygons;

and for at least one polygon edge, the system comprises electronic circuitry configured to implement the following steps:

   - calculating a distance (d) between the current position of the aircraft and each polygon edge;
   - when the vertical trajectory profile corresponds to a climb, determining, as a function of the vertical trajectory profile, whether, after having travelled the distance to the edge minus the lateral margin, the altitude of the aircraft is greater than that of said edge plus the vertical margin, and, if such is the case, excluding the edge from the search for a flyable lateral trajectory; or
   - when the vertical trajectory profile corresponds to a descent, determining, as a function of the vertical trajectory profile, whether, after having travelled the distance to the edge plus the lateral margin, the altitude of the aircraft is lower than that of an altitude layer below said edge plus the vertical margin, and, if such is the case, excluding the edge from the search for a flyable lateral trajectory.

Fig. 1

Fig. 2

Fig. 3

Obtenir des informations d'obstacles sous forme de polygones par tranches d'altitude    401

Dilater les polygones    402

Fusionner des polygones qui se touchent ou se chevauchent    403

Rétracter les polygones    404

Simplifier les arrêtes des polygones    405

Fig. 4

Fig. 5A

Fig. 5B

Fig. 5C

Fig. 6A

Fig. 6B

P1     P2

VM

800

A_ALT

d2

## Fig. 7

800

LM

P2     LM

LM

P1     LM

800

d2

## Fig. 8

Obtenir un profil de trajectoire verticale 〜901

Obtenir une position courante et une direction de vol de l'aéronef 〜902

Obtenir une position, une altitude et une direction à suivre à destination 〜903

904

Obtenir des informations d'obstacles (terrain, météo, zones militaires) sous forme de polygones par couches d'altitude

Appliquer au moins un filtre de simplification 〜905

Rechercher une trajectoire volable selon le profil de trajectoire verticale 〜906

Fig. 9

Fig. 10A

Fig. 10B

Fig. 10C

Fig. 10D

Fig. 10E

Définir deux premiers cercles relativement à la position courante de l'aéronef    1101

Définir deux deuxièmes cercles relativement à la destination à atteindre    1102

Recherche de trajectoire volable tangentielle entre un dit premier cercle et un dit deuxième cercle    1103

non    OK ?    oui

1106

1104

1105

Recherche de trajectoire par contournement de sommets des polygones

Fournir la trajectoire

OK ?    oui

non

1107

Alerter    1108

Fig. 11

Fig. 12A

T_POS

T_TRK

A_POS

T_POS

T_TRK

A_POS

Fig. 12C

Fig. 12B

T_POS

T_TRK

A_POS

Fig. 12D

T_POS

T_TRK

A_POS

Définir un troisième cercle autour des sommets de poylgones — 1301

Recherche de trajectoire volable tangentielle entre un dit premier cercle et un dit troisième cercle — 1302

non ← OK ? → oui

1303

Alerter

1308

1304 — Ajout d'au moins une trajectoire candidate dans une liste L

1305 — Exploration d'au moins une trajectoire candidate de la liste L

1306

non ← OK ? → oui — 1307 Fournir la trajectoire

Fig. 13A

Extraire une trajectoire
candidate de la liste L — 1351

Recherche de trajectoire volable
tangentielle entre un troisème cercle
courant et un dit deuxième cercle — 1352

non    OK ?    oui

1353

1354

Fournir la
trajectoire

Recherche de trajectoire volable
tangentielle entre troisèmes cercles — 1355

non    OK ?    oui

1358

1356

1357

Continuer l'exploration
des trajectoires
candidates de la liste L

Ajout d'au moins une
trajectoire candidate
dans la liste L

Fig. 13B

Fig. 14A

Fig. 14B

Fig. 15A

Fig. 15B

Fig. 16A

Fig. 16B

Fig. 17

Fig. 18

EP 4 083 966 B1

Fig. 19

Fig. 20

Fig. 21

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6424889 B1

**Littérature non-brevet citée dans la description**

- Bi-level Flight Path Planning of UAV Formations with Collision Avoidance. **D'AMATO EGIDIO et al.** JOURNAL OF 1NTELL1GENT. SPR1NGER NETHERLANDS, 11 May 2018, vol. 93, 193-211

- Optimal Flight paths over Essential Visibility Graphs. 2018 1NTERNAT10NAL CONFERENCE ON UNMANNED AIRCRAFT SYSTEMS (1CUAS). 1EEE, 12 June 2018, 708-714